(19) Europäisches Patentamt
European Patent Office
Office européen des brevets

(11) **EP 4 038 722 B1**

(12) **EUROPÄISCHE PATENTSCHRIFT**

(45) Veröffentlichungstag und Bekanntmachung des Hinweises auf die Patenterteilung:
**03.09.2025   Patentblatt 2025/36**

(21) Anmeldenummer: **19783008.6**

(22) Anmeldetag: **02.10.2019**

(51) Internationale Patentklassifikation (IPC):
**H02K 1/27** (2022.01)

(52) Gemeinsame Patentklassifikation (CPC):
**H02K 1/278; H02K 2213/03**

(86) Internationale Anmeldenummer:
**PCT/EP2019/076749**

(87) Internationale Veröffentlichungsnummer:
**WO 2021/063501 (08.04.2021 Gazette 2021/14)**

(54) **PERMANENTERREGTER ROTOR MIT VERBESSERTER MAGNETGEOMETRIE**

PERMANENTLY EXCITED ROTOR WITH IMPROVED MAGNET GEOMETRY

ROTOR À EXCITATION PERMANENTE À GÉOMÉTRIE D'AIMANT AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.08.2022   Patentblatt 2022/32**

(73) Patentinhaber: **WILO SE**
**44263 Dortmund (DE)**

(72) Erfinder: **SCHMÜLLING, Stefan**
**44263 Dortmund (DE)**

(74) Vertreter: **Cohausz Hannig Borkowski Wißgott Patentanwaltskanzlei GbR**
**Grafenberger Allee 337a**
**40235 Düsseldorf (DE)**

(56) Entgegenhaltungen:
EP-A1- 2 800 244      EP-A1- 3 001 037
EP-A1- 3 076 529      EP-A1- 3 451 500
EP-A2- 2 991 196      DE-A1- 102011 105 867
JP-A- 2003 124 019    US-A1- 2018 198 333

**Beschreibung**

Die vorliegende Erfindung betrifft allgemein das Gebiet der permanentmagnetischen Rotoren.

Im Besonderen betrifft die Erfindung einen Rotor für eine rotierende elektrische Maschine, insbesondere für einen Elektromotor vorzugsweise einer Kreiselpumpe, umfassend eine Anzahl von radial magnetisierten Permanentmagneten, die entlang des Außenumfangs des Rotors in Oberflächenausnehmungen eines flussleitenden Kerns angeordnet sind, der drehfest mit einer Rotorwelle verbunden ist oder durch einen Teil einer Rotorwelle gebildet ist, wobei die Permanentmagnete im Querschnitt betrachtet durch eine kreisbogenförmigen Außenkontur mit einem Radius, der dem Außenradius des Rotors entspricht, und eine Innenkontur derart definiert sind, dass die radiale Dicke der Permanentmagnete in ihrer Mitte maximal ist und in Umfangsrichtung zu den Seiten hin abnimmt, wobei die maximale radiale Dicke der Permanentmagnete 65-95% der maximalen radialen Dicke des Kerns (3) beträgt.

Ein Rotor der genannten Art ist aus der europäischen Patentanmeldung EP3451500A1 bekannt. Der Stand der Technik kennt darüber hinaus eine Vielzahl verschiedenster permanentmagnetischer Rotoren, insbesondere eine Vielzahl unterschiedlicher Geometrien und Größen von isotropen oder anisotropen Permanentmagneten im Rotor. Gleichwohl ist im Stand der Technik keine Geometrie bekannt, die das eingesetzte Magnetmaterial bestmöglich nutzt bzw. bei der die eingesetzte Menge an Magnetmaterial in Bezug auf dessen Ausnutzung minimal ist.

Beispielsweise sind Rotoren mit vergrabenen Permanentmagneten bekannt, die sich dadurch auszeichnen, dass die Permanentmagnete in geschlossenen Ausnehmungen innerhalb des Kerns axial eingeschoben einliegen, so dass zwischen Permanentmagnet und Luftspalt das Material des Kerns vorhanden ist. Die Geometrie dieser Permanentmagnete kann im Querschnitt betrachtet beispielsweise quader- oder trapezförmig sein oder eine konvexe Außen- und Innenkontur aufweisen. Demgegenüber gibt es oberflächenmontierte Magnete mit ähnlichen Geometrien und im Bereich der Elektromotoren von Kreiselpumpenaggregaten, wie sie beispielsweise in Heizungs-, Kühl- oder Trinkwasseranlagen als Umwälz-, Lade- oder Boosterpumpen eingesetzt werden, finden häufig Rotoren mit ringförmigen Magneten mit oder ohne Eisenkern Anwendung.

Die Permanentmagnete besitzen notwendigerweise eine gewisse Dicke, um ein ausreichendes Drehmoment zum Antreiben der Last zu entwickeln. Gleichzeitig ist das Platzangebot im Elektromotor begrenzt, einerseits durch die Statorbohrung, andererseits durch die Rotorwelle. Dies gilt umso mehr, wenn ein bestehender Rotor ersetzt und deshalb dessen Abmessungen berücksichtigt werden müssen. Bei Rotoren mit Eisenkern ist die radiale Kerndicke deshalb meist zu gering, um den gesamten magnetischen Fluss aufzunehmen bzw. für den magnetischen Rückschluss zu führen, so dass die Menge an Magnetmaterial nicht vollständig ausgenutzt wird.

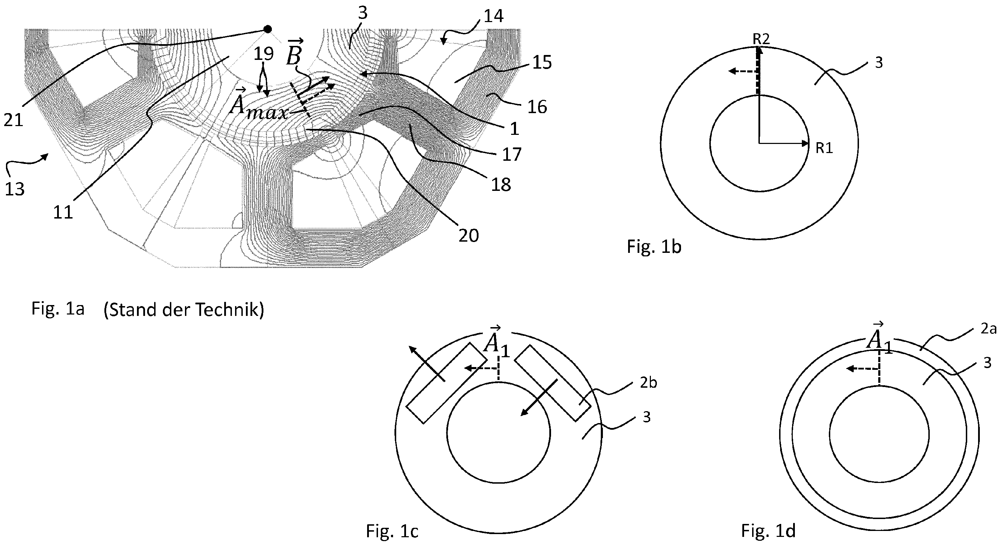

Um einen hohen Wirkungsgrad der elektrischen Maschine zu erreichen, ist eine hohe magnetische Flussdichte B im Eisenkern nötig. Aufgrund der Sättigung des Eisens hat die Flussdichte B ein physikalisches Maximum, womit auch der magnetische Fluss $\phi = \vec{B} \cdot \vec{A}$ durch eine Querschnittsfläche $\vec{A}$ limitiert ist. $\vec{A}$ ist diejenige Querschnittsfläche in $m^2$, deren Normalenvektor parallel zum Flussdichtevektor $\vec{A}$ bzw. rechtwinklig zum magnetischen Fluss $\phi$ liegt. Dies ist in Fig. 1a veranschaulicht, welche die Verteilung der magnetischen Feldlinien für einen Volleisenkern 3 ohne Permanentmagnete zeigt. Die Fläche $\vec{A}$ ergibt sich aus der radialen Dicke des Rotorkerns 3 (Außenradius R2 - Innenradius R1) multipliziert mit der axialen Rotorlänge, siehe hierzu Fig. 1b. Bei dem Volleisenkern 3 gemäß Fig. 1a ist die Fläche $\vec{A} = \vec{A}_{max}$ maximal. Fig. 1c zeigt demgegenüber, dass bei vergrabenen Blockmagneten 2b die für den magnetischen Rückschluss effektiv genutzte Fläche $\vec{A}$ kleiner ist, als in Fig. 1a, da nur derjenige Bereich $\vec{A}_1$ zwischen in Umfangsrichtung benachbarten Permanentmagneten 2b dem Rückschluss dient, der radial unterhalb der Permanentmagnete 2b liegt. Somit wird die maximale radiale Dicke des Rotorkerns 3 nicht ausgenutzt. Fig. 1d zeigt, dass bei einem ringförmigen Magneten 2a mit koaxialem Eisenkern 3 zwar die gesamte radiale Dicke des Kerns 3 als Fläche $\vec{A}_1$ für den magnetischen Rückschluss genutzt wird, jedoch ist diese Dicke aufgrund der radialen Dicke des Ringmagneten 2a bei gleichem Außendurchmesser R2 des Rotors wie in Fig. 1a und 1c zwangsläufig geringer. Die geringere Fläche $\vec{A}_1 < \vec{A}_{max}$ für den magnetischen Rückschluss macht sich insbesondere bei kleineren Motoren bemerkbar. Im Ergebnis wird das Magnetmaterial, das zumeist seltene Erden enthält und deshalb teuer ist, nicht vollständig ausgenutzt.

Es sind ferner auch Rotoren mit Ringmagneten bekannt, die einen internen Rückschlusspfad für den magnetischen Fluss aufweisen und als Halbach-Array oder Halbbach-Zylinder bezeichnet werden. Diese Ringmagnete benötigen keinen Eisenkern, sind jedoch vergleichsweise dick, um einerseits den internen Rückschlusspfad bereitstellen zu können und andererseits die mechanischen Aufgaben des Eisenkerns zu übernehmen. Sie benötigen deshalb viel Magnetmaterial, weshalb Halbach-Arrays oder Halbbach-Zylinder sehr teuer sind.

Ein weiterer Nachteil des Standes der Technik besteht darin, dass ein Wechsel von isotropen Ringmagneten zu anisotropen Magneten aufgrund der unterschiedlichen Magneteigenschaften eine vollständig neue Rotorkonstruktion erfordert.

Es ist Aufgabe der vorliegenden Erfindung, einen Rotor mit Permanentmagneten bereitzustellen, der eine maximale flussleitende Querschnittsfläche A für den magnetischen Rückschluss im Kern aufweist und das für die Permanentmagnete verwendete Magnetmaterial optimal ausnutzt, wobei gleichzeitig bei gleichem oder sogar erhöhten Drehmoment Magnetmaterial eingespart werden soll. Weiterhin ist es Aufgabe der Erfindung einen Rotor mit Permanentmagneten bereitzustellen, der einen bestehen Rotoren mit einem Ringmagneten bei identischen oder sogar besseren magnetischen Eigenschaften ersetzen kann.

Diese Aufgabe wird durch einen Rotor mit den Merkmalen des Anspruchs 1 gelöst. Vorteilhafte Weiterbildungen sind in den Unteransprüchen genannt und/ oder werden nachfolgend erläutert.

Gemäß der Erfindung wird ein Rotor für eine rotierende elektrische Maschine, insbesondere für einen Elektromotor vorzugsweise einer Kreiselpumpe, vorgeschlagen, umfassend eine Anzahl von radial magnetisierten Permanentmagneten, die entlang des Außenumfangs des Rotors in Oberflächenausnehmungen eines flussleitenden Kerns angeordnet sind, der drehfest mit einer Rotorwelle verbunden ist oder durch einen Teil einer Rotorwelle gebildet ist.

Die Permanentmagnete sind im Querschnitt betrachtet durch eine kreisbogenförmige Außenkontur mit einem Radius, der dem Außenradius des Rotors entspricht, und eine Innenkontur derart definiert, dass die radiale Dicke der Permanentmagnete in ihrer Mitte maximal ist und in Umfangsrichtung zu den Seiten hin abnimmt. Die maximale radiale Dicke der Permanentmagnete beträgt 65-95% der maximalen radialen Dicke des Kerns, wobei die Innenkontur im Wesentlichen durch eine magnetische Äquipotenziallinie beschrieben ist.

Hierdurch wird erreicht, dass 100% der flussleitenden Fläche des Kerns zwischen dessen Außenradius und Innenradius benutzbar sind und somit der magnetische Fluss nicht durch den Aufbau des Rotors limitiert wird. Durch die optimierte Kontur der Permanentmagnete wird das vorhandene Magnetmaterial vollständig ausgenutzt, so dass kein Magnetmaterial verschwendet ist. Insgesamt kann Magnetmaterial im Vergleich zum Stand der Technik eingespart werden, wobei sogar ein höheres Drehmoment und damit eine höhere Leistung der Maschine erreicht werden kann. Des Weiteren ist von Vorteil, dass sowohl isotrope als auch anisotrope Magnete verwende werden können.

Im Vergleich zu kunststoffgebundenen Ringmagneten ermöglicht die Erfindung eine Einsparung von Magnetmaterial von bis zu 50%. Aufgrund der Kontur der Magnete und des Kerns liegt zudem keine Entmagnetisierung vor.

Durch die Anordnung der Permanentmagnete auf der Oberfläche des Kerns können diese außerdem leicht in einem Magnetfeld magnetisiert werden, während sie sich im Rotor befinden.

Unter radial magnetisierten Permanentmagneten werden solche Permanentmagnete verstanden, deren Pole jeweils außerhalb der Außen- und der Innenkontur liegen. Dabei kann es sich um eine rein radiale Orientierung der Magnetisierung handeln, bei der die magnetischen Momente radial bezogen auf die Rotorachse ausgerichtet sind. Eine derartige Magnetisierung kann beispielsweise durch Warmfließpressen erhalten werden. Alternativ kann es sich um eine quasi-radiale Orientierung der Magnetisierung handeln, bei der die magnetischen Momente in der Mitte der Permanentmagnete radial bezogen auf die Rotorachse ausgerichtet sind, die magnetischen Momente im Übrigen jedoch parallel zueinander liegen. Eine derartige Magnetisierung wird beispielsweise erreicht, wenn Permanentmagnete im Rotor magnetisiert werden.

Entlang einer magnetischen Äquipotenziallinie haben alle Punkte des magnetischen Feldes dasselbe magnetische Vektorpotenzial **A(r)**. Eine Äquipotenziallinie verbindet somit den geometrischen Ort aller Punkte desselben magnetischen Vektorpotenzials miteinander, welches ein bestimmter Punkt p1 im Kern besitzt. Beispielsweise kann die Äquipotenziallinie durch die folgende Gleichung beschrieben werden,

$$\varphi = \frac{1}{p} arccos\left(\frac{\left(1 - \frac{x_{max}}{D_{max}}\right)}{\left(1 - \frac{R_2 - r}{D_{max}}\right)}\right)$$

wobei

$\varphi$      der Winkel des Punktes in Polarkoordinaten

r      der Radius des Punktes in Polarkoordinaten

p      die Polpaarzahl des Rotors

$x_{max}$      die maximale radiale Dicke der Permanentmagnete

$D_{max}$      die maximale radiale Dicke des Kerns und

R2      der Außenradius des Rotors ist.

Der genannte Punkt ist durch die maximale radial Dicke der Permanentmagnete festgelegt. Er liegt somit auf einem Radius durch die Mitte der Permanentmagnete auf derjenigen Höhe, wo Kern und Magnet aneinandergrenzen. Die Mitte der Permanentmagnete bildet die Polmitte. Äquipotenziallinien liegen rechtwinklig zu den magnetischen Feldlinien, die die Richtung und den Verlauf des magnetischen Flusses beschreiben. Aus diesem Grund verläuft auch die erfindungsgemäße Innenkontur der Permanentmagnete im Wesentlichen rechtwinklig zu den magnetischen Feldlinien, was es ermöglicht sowohl isotrope als auch anisotrope Permanentmagnete zu verwenden.

Erfindungsgemäß wird unter der Außenkontur die Geometrie derjenigen äußeren Begrenzungsfläche der Permanentmagnete verstanden, die zu dem den Rotor umgebenden Stator des Elektromotors gerichtet ist, bzw. diesem Stator gegenüberliegt. Als Innenkontur wird demgemäß die Geometrie derjenigen äußeren Begrenzungsfläche der Permanentmagnete verstanden, die innerhalb des Rotors liegt. Sie ist dem Stator abgewandt und grenzt an den Kern.

Die Oberflächenausnehmungen des Kerns besitzen idealerweise eine konkave Kontur, die in Form und Größe der Innenkontur der Permanentmagnete entspricht, um eine formschlüssige Aufnahme der Permanentmagnete in den Oberflächenausnehmungen zu erreichen.

Der Kern besitzt einen Außenradius, der durch die Oberflächenausnehmungen unterbrochen ist. In einer Ausführungsvariante besitzt der Kern auch einen Innenradius, der durch eine zentrale Ausnehmung im Kern bedingt ist, durch die sich die Rotorwelle hindurch erstreckt.

In einer anderen Ausführungsvariante ist der Kern durch einen Teil einer Rotorwelle gebildet, so dass keine zentrale Ausnehmung im Kern vorhanden sein muss. Kern und Welle bilden hier ein einziges Teil. Die Oberflächenausnehmungen sind also bei dieser Ausführungsvariante direkt in der Rotorwelle ausgebildet. Somit sind auch die Permanentmagnete in der Rotorwelle angeordnet. Die Rotorwelle bildet gleichzeitig den Rotor, wobei der innerhalb des Stators einliegende axiale Abschnitt der Rotorwelle als Rotor im Sinne der Erfindung zu verstehen ist. Die Rotorwelle kann in diesem Abschnitt einen größeren Durchmesser besitzen, als außerhalb dieses Abschnitts bzw. außerhalb des Stators. Es ist aber auch möglich, dass die Rotorwelle innerhalb und außerhalb des Stators einen identischen Durchmesser besitzt.

Sofern nachfolgend von dem Kern gesprochen wird, ist zu berücksichtigen, dass der Kern in einer Ausführungsvariante durch einen Teil, insbesondere dem im Stator liegenden Abschnitt der Rotorwelle gebildet sein kann, so dass die Begriffe Kern und Rotorwelle austauschbar sind. Im Falle einer massiven Rotorwelle, die den Kern bildet, ist unter der maximalen radialen Dicke des Kerns der (Außen-) Radius der Rotorwelle, d.h. der Abstand von der Wellenachse zum Außenumfang der Rotorwelle zu verstehen, so dass $D_{max} = R_2$ ist.

Aufgrund der erfindungsgemäßen Geometrie der Permanentmagnete ist der Kern im Querschnitt betrachtet kreuz- oder sternförmig. Seine maximale radiale Dicke liegt im Bereich von sich sternförmig nach außen erstreckenden Armen vor, die dort der Differenz zwischen Außenradius und Innenradius entspricht. Somit wird für den magnetischen Fluss die maximal verfügbare Querschnittsfläche $\vec{A}$ im Kern genutzt. Die Arme trennen zwei in Umfangsrichtung benachbarte Permanentmagnete voneinander. Zwei in Umfangsrichtung benachbarte Arme sind wiederum durch Schenkel miteinander verbunden.

Die minimale radiale Dicke des Kerns liegt in der Mitte der Schenkel, wo die Permanentmagnete ihre maximale Dicke besitzen. Die Mitte eines Permanentmagneten in Umfangsrichtung wird als Polmitte verstanden.

Vorzugsweise sind die Permanentmagnete symmetrisch, insbesondere spiegelsymmetrisch zu einer Mittelachse der Magnete, die dem Radius in der Polmitte entspricht.

In einer Ausführungsvariante, bei der der Kern drehfest mit der Rotorwelle verbunden ist, kann der Kern geeigneterweise aus einem ferromagnetischen Material, beispielsweise aus Eisen bestehen. Er kann in bekannter Weise als Paket aus einem Stapel einzelner Bleche, beispielsweise aus Elektroblechen gebildet sein. Alternativ kann der Kern massiv beispielsweise in einem Pressverfahren aus ferromagnetischem Pulver hergestellt sein. Er ist selbst nicht permanentmagnetisch und dient lediglich der Flussleitung. Die Rotorwelle kann aus Edelstahl oder Keramik sein. In einer Ausführungsvariante, bei der die Rotorwelle gleichzeitig den Kern bildet, kann die Rotorwelle bzw. der Kern aus magnetischem Stahl hergestellt sein.

Da die magnetische Flussdichte eines Permanentmagnets und damit das vom Rotor zu entwickelnde Drehmoment umso größer ist, je dicker die Permanentmagnete in radialer Richtung sind, ist man bestrebt, deren radiale Dicke so groß wie möglich zu wählen. Dies ist jedenfalls im Falle eines Neudesigns des Rotors bzw. Elektromotors möglich. Gleichwohl darf die minimale Dicke des Kerns nicht zu gering sein, um den Kern einfach herstellen zu können, beispielsweise durch Stanzen der einzelnen Bleche. Bei einer Magnetdicke von beispielsweise 98% beträgt die minimale Kerndicke nur 2%, was möglicherweise nicht mehr einfach hergestellt werden kann oder zu Stabilitätsproblemen führt. In der Praxis sollte die minimale radiale Kerndicke im Falle eines Blechpakets mindestens 1mm betragen. Es ist somit ein Kompromiss zwischen maximaler Magnetdicke und Mindestdicke des Kerns zu wählen. Um diesem Kompromiss gerecht zu werden kann die maximale radiale Dicke der Permanentmagnete bevorzugt zwischen 85% und 90% der maximalen radialen Dicke des Kerns betragen. Die minimal radiale Dicke des Kerns beträgt dann entsprechend zwischen 10% und 15% der maximalen Kerndicke.

Soll gemäß einem anderen Fall der erfindungsgemäße Rotor einen anderen Rotor nach dem Stand der Technik ersetzen, sind dessen elektromagnetische Eigenschaften zu berücksichtigen. Beispielsweise kann die maximale radiale Dicke der Permanentmagnete gerade so bemessen werden, dass ein mit diesen Permanentmagneten bestückter Rotor dieselbe elektromagnetische Kraft (EMF) erzeugt oder dieselbe Spannung im Stator induziert, wie der andere Rotor nach dem Stand der Technik. In einem solchen Fall es durchaus möglich, dass Permanentmagnete mit einer maximalen radialen Dicke von nur 65% bis 70% genügen.

Durch die Festlegung der maximalen radialen Dicke der Permanentmagnete ist das magnetische Potenzial an der Grenze zwischen Permanentmagnet und Kern festgelegt, so dass auch das Potenzial auf der Äquipotenziallinie und damit deren Lage und Verlauf festgelegt ist. Hieraus ergibt sich auch die Breite der Permanentmagnete, d.h. über welchen Umfangswinkel sich diese erstrecken, sowie der entsprechende Abstand zwischen benachbarten Permanentmagneten an den zueinander gerichteten Umfangsenden, bzw. die Breite der Arme.

Gemäß einer Ausführungsvariante kann die Magnetisierung von im Umfangsrichtung benachbarten Permanentmagneten entgegengesetzt sein. Dies bedeutet, dass sich entlang des Umfangs des Rotors Nord- und Südpol abwechseln. Ein Pol ist dabei der geometrische Ort, an dem das Magnetfeld am stärksten ist. Pole bestehen somit nur bei den Permanentmagneten, so dass sich keine Pseudopole zwischen benachbarten Permanentmagneten ausbilden. Die magnetischen Feldlinien schließend sich in diesem Fall zudem innerhalb des Kerns zwischen benachbarten Permanentmagneten.

Gemäß einer anderen Ausführungsvariante kann die Magnetisierung von im Umfangsrichtung benachbarten Permanentmagneten gleich sein, so dass alle Magnete außen denselben Pol und innen denselben entgegengesetzten Pol besitzen. Dadurch entstehen zwischen benachbarten Permanentmagneten Pseudopole entgegengesetzter Magnetisierungsrichtung wie die Permanentmagnete.

Insbesondere hat der erfindungsgemäße Rotor bei Elektromotoren mit einer Leistung von weniger als 1 kW ein hohes Wirkungs- und Einsparungspotenzial, weshalb seine Verwendung bei diesen Elektromotoren bevorzugt ist.

Vorzugsweise ist der Außenradius des Rotors kleiner oder gleich 22,5mm, da bei größeren Rotoren die Vorteile einfacher Blockmagnete überwiegen. Beispielsweise kann der Außenradius zwischen 10mm und 15mm, bevorzugt etwa 12mm betragen. Idealerweise beträgt die maximale radiale Dicke des Kerns zwischen 4mm und 10mm, bevorzugt zwischen 5mm und 7mm, weiter bevorzugt etwa 6mm. Der Innenradius kann ebenfalls beispielsweise zwischen 4mm und 10mm, bevorzugt zwischen 5mm und 7mm betragen. Insbesondere können die angegebenen Abmessungen auch in beliebiger Kombination Anwendung finden.

Um die maschinelle Herstellung der Innenkontur zu vereinfachen, kann die Äquipotenziallinie durch Abschnitte aus Geraden und/ oder Kreisbögen approximiert sein, so dass die Innenkontur der Permanentmagnete nicht exakt, sondern nur im Wesentlichen entspricht. Eine Gerade besitzt eine entsprechende definierte Länge, ein Kreisbogen einen definierten Radius und Mittelpunkt, wobei letzterer in der Regel auf der Mittelachse der Magnete liegt. Beispielsweise können auf jeder Halbseite eines Permanentmagnets zwei, drei, vier oder noch mehr der genannten Abschnitte eine Hälfte der Äquipotenziallinie approximieren. Insgesamt kann die Äquipotenziallinie somit durch drei oder mehr Abschnitte aus Geraden und/ oder Kreisbögen approximiert sein, die bevorzugt knick- und versatzfrei ineinander übergehen, um eine glatte Innenkontur zu erhalten.

Gemäß einer Ausführungsvariante kann die Äquipotenziallinie aus insgesamt drei Abschnitten approximiert sein, wobei seitlich außen jeweils ein kreisbogenförmiger Abschnitt mit einem Radius vorliegt und diese identischen kreisbogenförmigen Abschnitte durch einen mittleren geraden Abschnitt verbunden sind, in welchen sie knick- und versatzfrei übergehen. Gemäß einer anderen Ausführungsvariante kann die Äquipotenziallinie aus insgesamt fünf Abschnitten approximiert sein, wobei seitlich außen jeweils ein erster kreisbogenförmiger Abschnitt mit einem ersten Radius vorliegt, an welche erste Abschnitte sich zur Polmitte hin weiter Innen jeweils ein zweiter kreisbogenförmiger Abschnitt mit einem zweiten Radius anschließt, und diese zweiten kreisbogenförmigen Abschnitte durch einen mittleren geraden Abschnitt verbunden sind, wobei alle Abschnitte knick- und versatzfrei ineinander übergehen.

Erfindungsgemäß entspricht der Außenradius des Kerns dem Außenradius des Rotors, so dass die Peripherie der Arme einen Umfangsabschnitt des Rotorumfangs bildet. Mit anderen Worten fluchtet dann die Außenkontur der Permanentmagnete mit dem Umfangsabschnitt der Arme des Kerns.

Um zu vermeiden, dass die Umfangsenden der Permanentmagnete bei deren Handhabung abbrechen, ist es von Vorteil, wenn die Permanentmagnete an ihren Umfangsenden Abflachungen aufweisen. Hierdurch wird vermieden, dass die Innen- und Außenkontur an den Umfangsenden spitz zuläuft, wodurch diese leicht abbrechen können. Infolge der Abflachung weicht die Innenkontur an den Umfangsenden von der Äquipotenziallinie leicht ab. Geeigneterweise kann das umfangsseitige Ende der Arme in Umfangsrichtung um den Raum verbreitert sein, der durch die Abflachung der Permanentmagnete entsteht, so dass die Magneten die Oberflächenausnehmungen weiterhin formschlüssig vollständig ausfüllen.

Bevorzugt kann eine zylindrische Hülse den Kern und die Permanentmagnete außen einkapseln, insbesondere abgedichtet einkapseln. Die Hülse hält die oberflächenmontierten Permanentmagnete in Position, so dass sie sich durch die Fliehkräfte nicht lösen können. Sofern die Hülse den Kern und die Permanentmagnete dichtend einkapselt, wird verhindert, dass Feuchtigkeit oder Wasser in den Kern oder zwischen Kern und Permanentmagnete eintritt und dort Korrosion verursacht. Dies ermöglicht eine Verwendung des Rotors als Nassläufer. Die Hülse kann geeigneterweise aus Blech bestehen, beispielsweise mit einer Dicke von 0,1-0,5mm, bevorzugt ca. 0,2mm.

In einer Ausführungsvariante kann zwischen dem Kern und der Rotorwelle ein ringförmiger Hohlraum bestehen, wobei der Kern nur über beidseitig der axialen Enden des Kerns angeordnete Endkappen drehfest mit der Rotorwelle verbunden ist. In radialer Richtung nach Außen ist der ringförmige Hohlraum durch die Innenseite des Kerns, nach Innen durch die Rotorwelle begrenzt. Hierdurch wird Gewicht des Rotors eingespart. Die Kraftübertragung zwischen Kern und Welle erfolgt dabei allein durch die Endkappen, die fest mit der Welle und dem Kern verbunden sind, beispielsweise durch Löten oder Schweißen. Vorzugsweise ist der ringförmige Hohlraum abgedichtet, so dass er ein abgeschlossenes Innenvolumen bildet. Eine solche Struktur ist für einen nasslaufenden Rotor, insbesondere in einer Umwälzpumpe für Heizungs-, Kühl- oder Trinkwasseranlagen vorteilhaft, da sie eine Dichtheitsprüfung ermöglicht.

Besonders bevorzugt kann der Rotor vier- oder sechspolig sein. Es sind jedoch auch andere Polanzahlen möglich.

Das Magnetmaterial, aus dem die Permanentmagnete hergestellt sind, kann bevorzugt seltene Erden enthalten, um eine hohe magnetischen Flussdichte zu erzeugen. Vorzugsweise kann kunststoffgebundenes Magnetmaterial verwendet und in die erfindungsgemäße Magnetkontur gepresst werden. Alternativ können heißgepresste Magnete verwendet und durch Warmfließpressen in die vorgeschlagene Kontur umgeformt werden.

Vorzugsweise besitzt der Kern keine eingeschlossenen Hohlräume. Er ist somit frei von Flusssperren.

Der erfindungsgemäße Rotor ist für einen Elektromotor, beispielsweise ein Synchronmotor vorgesehen. Dieser kann geeigneterweise in seiner Drehzahl mittels Frequenzumrichter angesteuert werden. In einer Ausführungsvariante kann der Elektromotor ein elektronisch kommutierter Gleichstrommotor (BLDC) sein.

Des Weiteren kann der Elektromotor als nasslaufender Motor ausgebildet sein, wobei ein Spaltrohr den Rotorraum vom Stator hermetisch trennt. Dies ermöglicht, den Rotorraum zu fluten und den Rotor in einer Flüssigkeit rotieren zu lassen. Dies schmiert die die Welle lagernden Gleitlager und kühlt den Motor. Der Rotor bildet in dieser Variante einen Nassläufer.

Gemäß einer bevorzugten Ausführungsvariante ist der Elektromotor Teil eines Kreiselpumpenaggregats, in dem der Elektromotor eine Kreiselpumpe antreibt. Die vorliegende Erfindung betrifft deshalb auch eine Kreiselpumpe, insbesondere für eine Heizungs-, Kühl oder Trinkwasseranlage, mit einem sie antreibenden Elektromotor, wobei der Elektromotor einen Rotor der vorbeschriebenen Art aufweist.

Sofern der Elektromotor als nasslaufender Motor ausgebildet ist, kann der Rotorraum vom Fördermedium der Pumpe durchströmt sein.

Weitere Eigenschaften, Vorteile und Merkmale der Erfindung werden nachfolgend anhand von Beispielen und der beigefügten Figuren erläutert.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:

| | |
|---|---|
| Fig. 1a: | die Verteilung der magnetischen Feldlinien bei einem Elektromotor mit einem Kern aus Eisen ohne Permanentmagnete |
| Fig. 1b: | eine vereinfachte Querschnittsdarstellung eines Rotors ohne Permanentmagnete |
| Fig. 1c: | eine vereinfachte Querschnittsdarstellung eines Rotors mit vergrabenen Permanentmagnete |
| Fig. 1d: | eine vereinfachte Querschnittsdarstellung eines Rotors mit Ringmagnet und Kern |
| Fig. 2a: | eine vereinfachte Prinzip-Darstellung eines erfindungsgemäßen Rotors im Querschnitt |
| Fig. 2b: | perspektivische Darstellung des Rotors nach Fig. 2b mit einem entfernten Permanentmagneten |
| Fig. 3a: | Querschnittsdarstellung eines vierpoligen Referenzrotors mit Äquipotenziallinien |
| Fig. 3b: | Verlauf des magnetischen Vektorpotenzials entlang eines Radius im Kern |
| Fig. 3c: | Verlauf des magnetischen Vektorpotenzials entlang des Rotorumfangs |
| Fig. 4a-4d: | Querschnittsdarstellungen von Referenzrotoren unterschiedlicher Polpaarzahlen mit Äquipotenziallinien |
| Fig. 5a-5d: | Querschnittsdarstellungen vierpoliger Referenzrotoren mit Äquipotenziallinien bei unterschiedlichen Innenradien |
| Fig. 6a, 6b: | Vergleich der Feldlinienverteilung bei einem Rotor mit dünnem Ringmagneten |
| Fig. 7a, 7b: | Vergleich der Feldlinienverteilung bei einem Rotor mit dickem Ringmagneten |
| Fig. 8a-8d: | erstes Ausführungsbeispiel eines erfindungsgemäßen Rotors |
| Fig. 9a-9d: | zweites Ausführungsbeispiel eines erfindungsgemäßen Rotors |

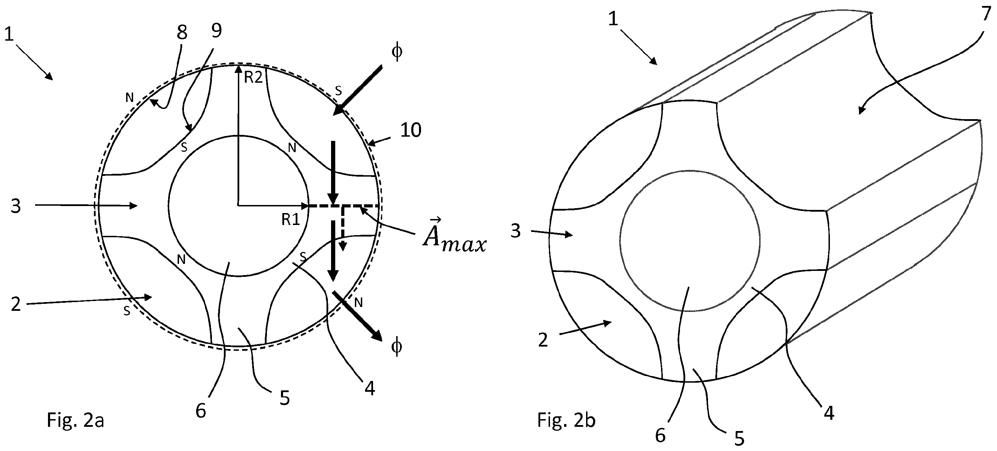

Fig. 2a zeigt eine Darstellung eines erfindungsgemäßen Rotors 1 für eine rotierende elektrische Maschine, insbesondere für einen Elektromotor 13 im Querschnitt. Vorzugsweise ist dieser Rotor 1 Teil eines Kreiselpumpenaggregats, wie es beispielsweise als Heizungsumwälzpumpe Verwendung findet. Beispielsweise kann der Rotor 1 nasslaufend sein und somit den Rotor 1 eines Spaltrohrmotors, insbesondere eines Kreiselpumpenaggregats bilden.

Der Rotor 1 umfasst eine Anzahl von Permanentmagneten 2, die entlang des Außenumfangs des Rotors 1 in Oberflächenausnehmungen 7 korrespondierender Form und Größe eines flussleitenden Kerns 3 aus Eisen angeordnet sind. Die Permanentmagnete sind somit oberflächenmontiert und bilden einen Umfangsabschnitt des Rotors 3. Dies vereinfacht die Magnetisierung der Magnete 2, wenn diese nach der Montage im Rotor durch ein externes elektromagnetisches Feld bewirkt wird, welches aufgrund geringer Fernwirkung in der Regel nicht sehr tief in den Rotor 1 eindringt.

In dem Beispiel nach Fig. 2a ist die Anzahl der Permanentmagnete 2 gleich vier, so dass ein 4-poliger Rotor 1 vorliegt. Die Permanentmagnete 2 sind radial magnetisiert, so dass jeder Permanentmagnet 2 radial außen den einen Pol und radial innen den anderen Pol aufweist. Die äußeren Pole von in Umfangsrichtung benachbarten Permanentmagneten 2 sind entgegengesetzt, so dass entlang des Umfangs am Ort der Permanentmagnete 2 abwechselnd ein ausgeprägter Nordpol N und Südpol S liegt. Pseudopole zwischen den Permanentmagneten 2 liegen nicht vor. Die Permanentmagnete 2 sind symmetrisch bezogen auf ihre Mittelachse wobei sie in ihrer Mitte am dicksten sind und die Dicke zu den Seiten hin abnimmt.

Der Kern 3 bildet ein kreuzförmiges Flussleitstück und kann aus einem Stapel Bleche oder massiv hergestellt sein.

Die Permanentmagnete 2 können beispielsweise in die Oberflächenausnehmungen 7 eingeklebt sein. Damit sie sich aufgrund der hohen Fliehkräfte bei der Rotation des Rotors 1 nicht vom Kern 3 lösen, werden sie von einer unmagnetischen Hülse 10 in Position gehalten, die den Rotorkern 3 und die Permanentmagnete 2 außenumfänglich umgibt. Bei der Verwendung der Hülse 10 kann zwar auf ein Verkleben oder eine sonstige Vorbefestigung der Permanentmagnete verzichtet werden, jedoch ist eine solche Vorbefestigung bei der Handhabung des Rotors zweckdienlich, sofern die Hülse 10 noch nicht aufgeschoben ist.

Die Hülse 10 hat im Falle der Verwendung des Rotors 1 bei einem nasslaufenden Elektromotor, wie er in Umwälzpumpen, beispielsweise in Heizungspumpen üblicherweise verwendet wird, außerdem den Zweck, den Kern 3 und die Magnete 2 hermetisch einzukapseln, insbesondere vor eindringendem Wasser zu schützen. Wird der Rotor 1 bei einem trockenlaufenden Elektromotor, beispielsweise bei Trockenläuferpumpen verwendet, kann auf die Hülse 10 auch verzichtet werden. Die Halterung der Permanentmagnete 2 erfolgt dann ausschließlich über deren Klebebefestigung am Kern 3 oder mittels Formschluss.

Es sei angemerkt, dass die Hülse 10 nicht berücksichtigt wird, soweit im Sinne der Erfindung von Maßangaben insbesondere von dem Außendurchmesser R2 des Rotors die Rede ist, sofern nichts anderes genannt ist. Der Außendurchmesser R2 schließt die Dicke der Hülse 10 also nicht mit ein. Die Hülse 10 hat beispielsweise eine Dicke von 0,2mm.

Der Kern 3 weist eine zentrale Ausnehmung 6 auf, die sich koaxial durch den Kern 3 erstreckt. Eine Rotorwelle 11 liegt in der Ausnehmung 6 ein und ist drehfest mit dieser verbunden, um ein Drehmoment zu übertragen. Dies kann unmittelbar erfolgen, indem der Kern 3 mit der Innenfläche der Ausnehmung 6 auf der Außenfläche der Welle 11 aufliegt, beispielsweise kraft- und/ oder formschlüssig.

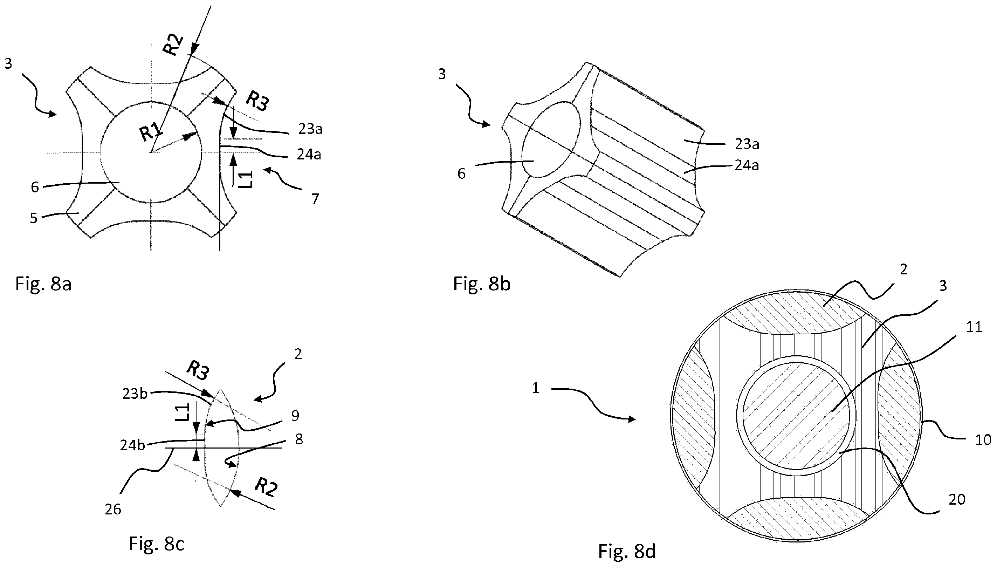

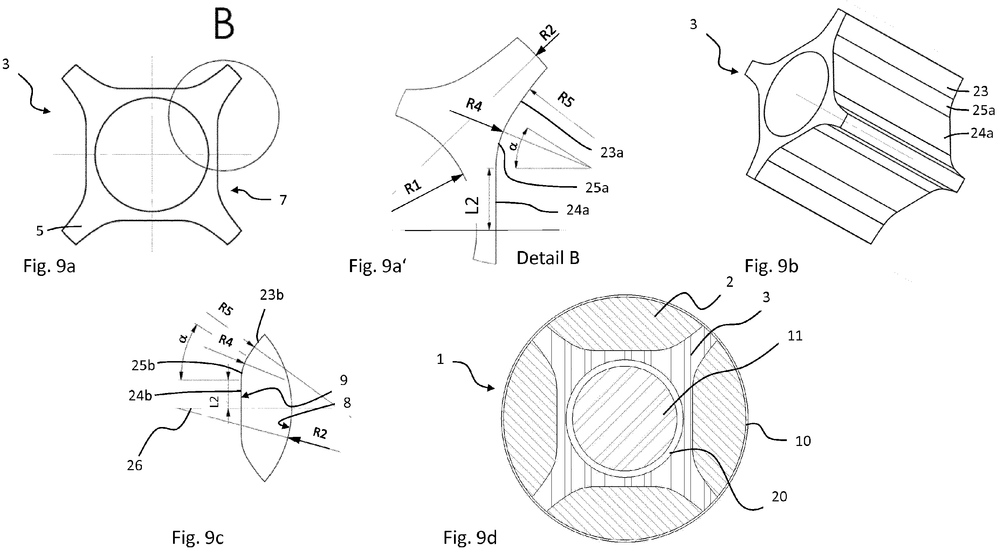

Alternativ kann dies mittelbar erfolgen. Hierzu kann zwischen Kern 3 und Welle 11 ein luftgefüllter Ringraum 22 (siehe Fig. 8d, 9d) vorgesehen sein, wobei die drehfeste Verbindung zwischen Welle 11 und Rotor 1 dann ausschließlich über Endkappen erfolgt, die den Rotor 1 an seinen axialen Stirnseiten abdecken und die einerseits fest mit der Welle 11 andererseits fest mit dem Kern 3 verbunden sind.

Die Endkappen können durch Lochscheiben gebildet sein, wobei die Welle 11 durch ein zentrales Loch dieser Endkappen geführt ist. Sie können beispielsweise mit der Welle 11 verschweißt oder verlötet, alternativ auf diese gepresst sein. Die Endkappen decken den Rotor 1 ferner derart an seinen axialen Enden ab, dass der Kern 3 hermetisch verschlossen ist. Hierzu können die Endkappen mit der Hülse 10 verschweißt oder verlötet sein. Der Hohlraum 22 hat den Vorteil, dass die Dichtigkeit des Rotors 1 überprüft werden kann. Hierzu wird der Rotor beispielsweise in Wasser getaucht und ein Unterdruck außerhalb des Wasser geschaffen, wobei die Dichtheit dann gegeben ist, wenn keine Blasen im Wasser aufsteigen. Ist dies jedoch der Fall, dringt Wasser in das Innere des Rotors ein und verdrängt die Luft im Hohlraum 22, weshalb es zu Korrosion des Kerns 3 und der Permanentmagnete 2 kommen kann.

Die Permanentmagnete 2 sind im Querschnitt betrachtet durch eine Außenkontur 8 und eine Innenkontur 9 definiert. Die Außenkontur 8 ist konvex und nur durch einen Kreisbogen mit einem Radius R2 beschrieben, der dem Außenradius R2 des Rotors 1, und hier auch des Kerns 3 entspricht. Die Innenkontur 9 ist erfindungsgemäß so gewählt, dass sie entlang einer magnetischen Äquipotenziallinie 12 verläuft. Je nach Wahl dieser Äquipotenziallinie 12, die durch die gewünschte radiale Dicke $x_{max}$ der Permanentmagnete 2 sowie durch die Anzahl der Pole des Kerns 3 festgelegt ist, kann die Innenkontur 9 verschieden sein.

Die Innenkontur 9 ist in der Ausführungsvariante gemäß Fig. 2a ebenfalls konvex, wobei sie aber auch vollständig oder abschnittsweise konkav sein kann (siehe z.B. Fig. 4a, 5a, 5b).

Die Innenkontur 9 kann vereinfacht durch mehrere, versatzfrei und vorzugsweise auch knickfrei ineinander übergehenden Abschnitte unterschiedlicher Geometrie beschrieben werden, wobei die Beschreibung umso genauer ist, je mehr Abschnitt verwendet werden. Die Abschnitte können Geradenabschnitte einer bestimmten Länge und/ oder Bogenabschnitte eines bestimmten Radius und eines bestimmten Winkels sein. Selbstverständlich ist es Ziel, die Äquipotenziallinie 12 durch die Abschnitte so genau wie möglich zu beschreiben, um diese optimale Kontur so exakt wie möglich zu erreichen und nicht davon abzuweichen.

So kann die Innenkontur 9 eines Permanentmagneten 2 in Fig. 2a beispielsweise durch einen Kreisbogen beschrieben werden, der im mittleren Bereich abgeflacht ist. Jede Magnethälfte ist in diesem Fall durch zwei Abschnitte definiert, nämlich einen äußeren Bogenabschnitt und einen inneren Geradenabschnitt, wobei die Geradenabschnitte der Magnethälften ineinander übergehen und zu einem einzigen Geradenabschnitt werden, der die Abflachung bildet. Alternativ kann jede Magnethälfte auch durch drei Abschnitte beschrieben werden, wobei ein außenliegender erster Abschnitt eine Gerade bildet, die in einen bogenförmigen zweiten Abschnitt übergeht, der wiederum in einen dritten, eine Gerade bildenden Abschnitt übergeht, welcher eine Hälfte des mittleren Bereichs der Innenkontur 9 bildet. Die Übergänge sind stetig, d.h. ohne Versatz und frei von Knicken. Die Beschreibung einer Äquipotenziallinie 12 durch einzelne Abschnitte wird im Folgenden anhand der Figuren 8a-8c und 9a-9c noch vertieft.

Der mittlere Bereich kann bei einer anderen Äquipotenziallinie 12 auch etwas eingedrückt sein, so dass die Innenkontur 9 insgesamt annähernd nierenförmig ist.

Die Permanentmagnete 2 haben in jedem Fall in Polmitte ihre maximale radiale Dicke $x_{max}$, wobei die Polmitte die Mitte der Permanentmagnete 2 in Umfangsrichtung ist. Die Permanentmagnete 2 sind spiegelsymmetrisch zur Polmitte, so dass die Mittelachse 26 der Permanentmagnete 2 ebenfalls mit der Polmitte zusammenfällt. Die Dicke der Permanentmagnete 2 nimmt in Umfangsrichtung zu beiden Seiten hin kontinuierlich ab. Der Querschnitt der Permanentmagnete 7, insbesondere auch des Rotors 1, ist über die axiale Länge konstant, wie Fig. 2b zu erkennen gibt.

Die Oberflächenausnehmungen 7 korrespondieren in Form und Größe der Innenkontur 9, so das ein Permanentmagnet 2 formschlüssig in einer Oberflächenausnehmung 7 einliegt, wie Fig. 2b veranschaulicht. In dieser Figur ist der Permanentmagnet 2 oben rechts entfernt, so dass der Blick auf die Außenkontur des Kern 3 im Bereich der Oberflächenausnehmungen 7 frei ist.

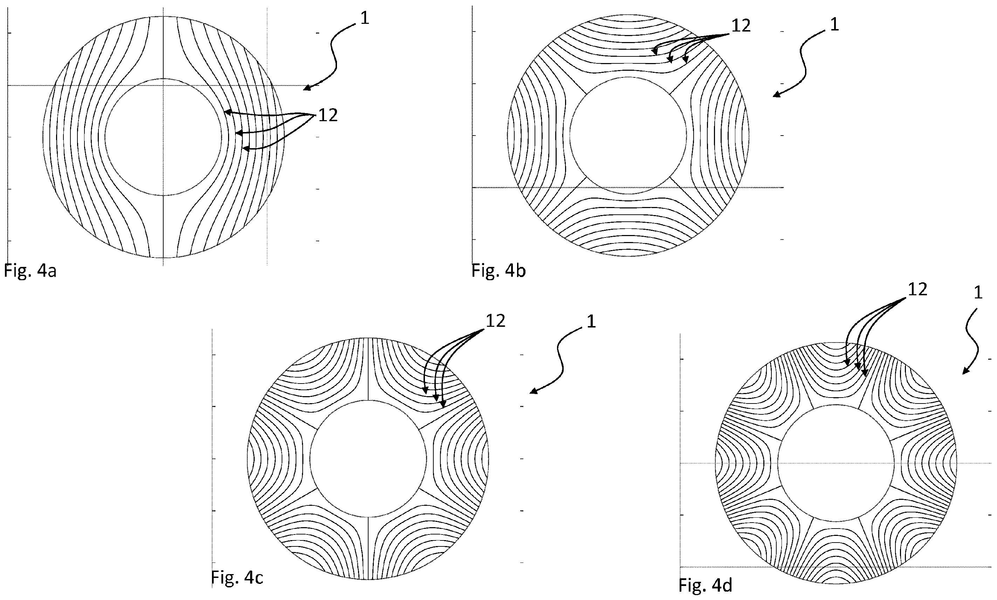

Die Breite der Permanentmagnete 2 in Umfangsrichtung ergibt sich aus dem Verlauf der Äquipotenziallinie 12, insbesondere daraus, wo diese den Außenradius R2 schneidet. Wie in Fig. 4a gezeigt, erstrecken sich die Permanentmagnete 2 über eine Breite, die einem Umfangswinkel von $2 \cdot \varphi_2$ entspricht. In Umfangsrichtung benachbarte Permanentmagnete 2 sind deshalb voneinander beabstandet, wobei zwischen ihnen ein Teil des flussleitenden Kerns 3 liegt, der als Arm 5 betrachtet wird. Im Querschnitt ist der Kern 3 infolge der Geometrie der Permanentmagnete 2 kreuz- oder sternförmig, wobei sich die Arme 5 radial nach außen erstrecken und benachbarte Arme 5 durch einen radial innen liegenden Schenkel 4 in annähernder Form eines Ringsegments miteinander verbunden sind.

Der Kern 3 hat im Bereich der Arme 5 seine maximale radiale Dicke $D_{max}$, die der Differenz des Außenradius R2 zu einem Innenradius R1 entspricht, der die zentrale Ausnehmung 6 im Kern 3 definiert ist. Die radiale Dicke $D_{max}$ der Arme 5 ist somit

$$(\text{Gl. 1}) \qquad D_{max} = R2 - R1.$$

Daraus ergibt sich, dass zwischen benachbarten Permanentmagneten 2 die maximale Querschnittsfläche $\vec{A}_{max}$ für den magnetischen Fluss zur Verfügung steht, d.h. dieser Fluss nicht limitiert wird. Ein limitierender Faktor ist allein der Außendurchmesser R2 des Rotors 2 und die Dicke $D_{max}$ des Kerns 3.

Die Permanentmagnete 2 sind radial magnetisiert. Das bedeutet, dass der magnetische Nord- und Südpol radial außen und radial innen liegen, wobei die maximale Feldstärke in der Polmitte liegt, da die Magnete 2 hier am dicksten sind. In Umfangsrichtung benachbarte Permanentmagnete 2 sind in entgegengesetzter Richtung magnetisiert. Somit wechseln sich Nord- und Südpol entlang des Umfangs von Magnet zu Magnet ab. Die Richtung des magnetischen Flusses $\phi$ ist in Fig. 2a durch Pfeile vereinfacht dargestellt. Die magnetischen Feldlinien schließend sich im Kern 3 annähernd homogen, in dem sie von einem Permanentmagneten 2 zum benachbarten Permanentmagneten 2 durch den Arm 5 und senkrecht zur Querschnittsfläche $\vec{A}_{max}$ verlaufen.

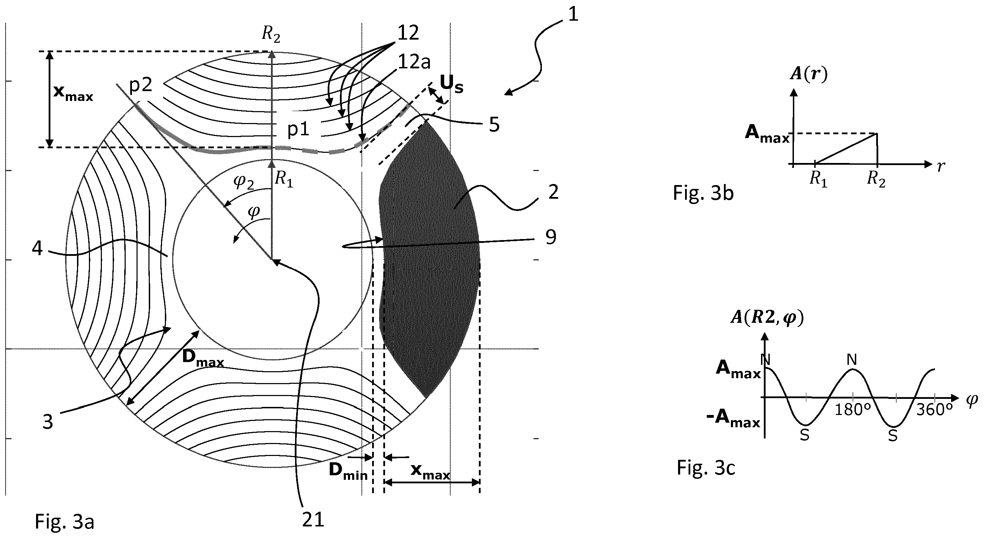

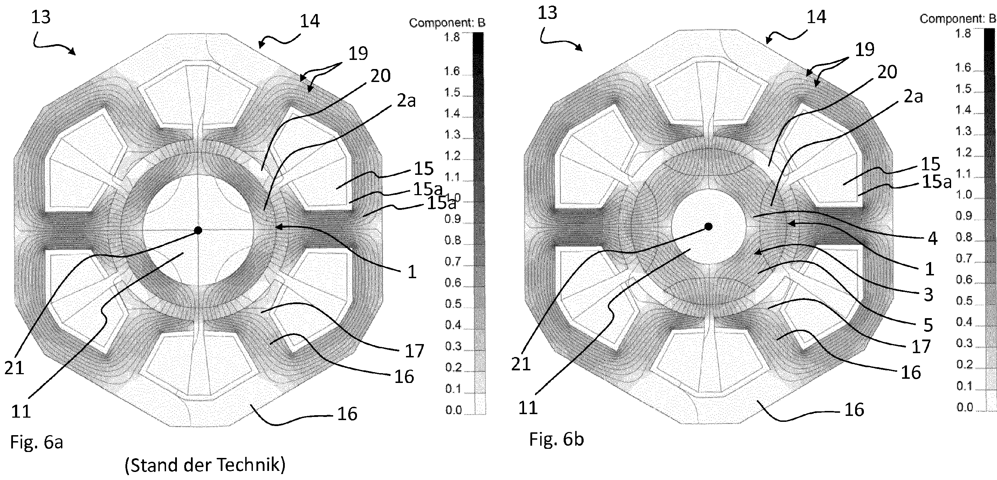

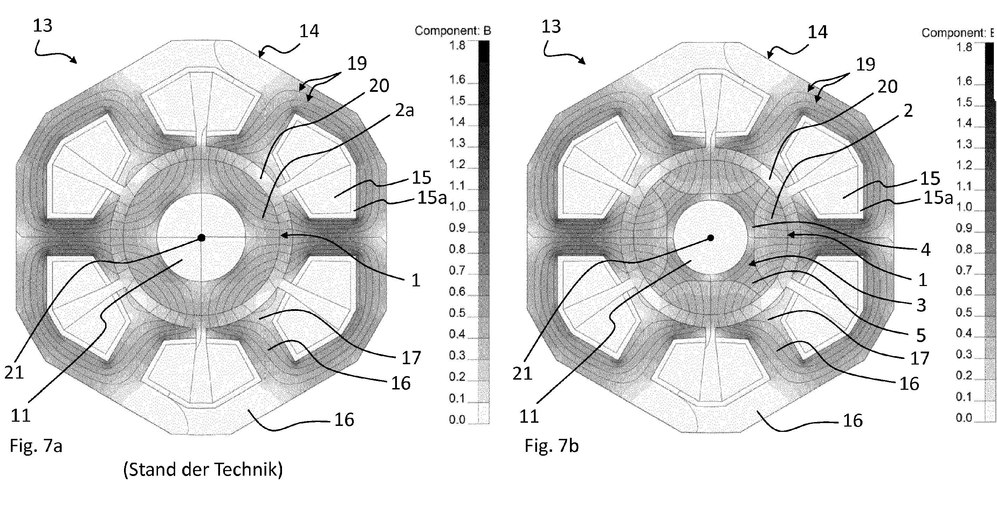

Für die Festlegung der Innenkontur 9 wird das magnetische Vektorpotenzial **A(r)** des Feldes im Rotor 1 herangezogen. Dies wird anhand von Fig. 3a-3c erläutert. Es handelt sich dabei um eine mathematische Hilfsgröße in Form eines Vektorfeldes **A(r)** dessen Rotation ein zweites Vektorfeld erzeugt, das die magnetische Flussdichte **B(r)** beschreibt. Betrachtet wird hierfür ein Referenzrotor 1 mit einem Eisenkern 3 ohne Permanentmagnete 2 (Volleisenrotor), welches vom magnetischen Feld des Stators des Elektromotors 14, innerhalb dem sich der Rotor 1 befindet, durchdrungen wird, siehe Fig 3a. Diese Fig. 3a zeigt auch den Verlauf der Feldlinien 19 des magnetischen Feldes. Obgleich ein Volleisenrotor 1 für die Betrachtung verwendet wird, ändert sich der Verlauf der Feldlinien 19 durch die Integration erfindungsgemäßer Permanentmagnete 2 in diesen Rotor 1 nicht, wie Fig. 6b und 7b zeigen.

Entlang eines Radius r des Kerns 3 steigt das Potenzial **A(r)** vom Innenradius R1 zum Außenradius R2 linear an, wie Fig. 3b zeigt. Dies lässt sich mathematisch wie folgt beschreiben:

$$(\text{Gl. 2}) \qquad A(r, \varphi = 0) = A_{max} \cdot \left(1 - \frac{R_2 - r}{R_2 - R_1}\right), \text{ mit } r \in [R1, R2].$$

Das magnetische Vektorpotenzial **A(r)** ist somit am Innenradius R1 und innerhalb der Ausnehmung 6 gleich null, A(r≤R1)=0. Radial außen am Kern 3, d.h. auf Höhe des Außenradius R2, ist das Potenzial dagegen maximal, A(r=R2)

$=A_{max}$.

Des Weiteren ist das magnetische Vektorpotenzial $A(r)$ entlang des Außenumfangs des Rotors 1 sinusförmig, wie Fig. 3c anhand eines vierpoligen Statorfeldes zeigt. Somit wechselt das Potenzial $A(r=R2)$ entlang des Umfangs mit fortschreitendem Umfangswinkel $\varphi$ sinusförmig zwischen dem positiven und dem negativen Maximalwert $A_{max}$, an welchem die eigentlichen Pole S, N liegen. Der Nullwinkel $\varphi = 0$ wird hierbei der Einfachheit halber bei dem positiven Maximalwert $A_{max}$ angenommen. Die Potenzialverteilung am Außenradius $R_2$ lässt sich mathematisch für einen Rotor mit beliebiger Polpaarzahl p wie folgt beschreiben:

$$(\text{Gl. 3}) \qquad A(r = R2, \varphi) = A_{max} \cdot \cos(p \cdot \varphi),$$

Wobei p die Anzahl der Polpaare, d.h. 2p die Anzahl der Pole des Statorfeldes ist. Im betrachteten Fall eines vierpoligen magnetischen Feldes ist somit p = 2.

Das magnetische Vektorpotenzial $A(r, \varphi)$ eines Punktes p an einem beliebigen geometrischen Ort mit den Koordinaten p(r, $\varphi$) kann nach Gleichung Gl.4 angegeben werden.

$$(\text{Gl. 4}) \qquad A(r, \varphi) = A_{max} \cdot \left(1 - \frac{R_2 - r}{R_2 - R_1}\right) \cdot \cos(p \cdot \varphi),$$

Betrachtet man nun einen Permanentmagneten 2 mit der maximalen radialen Dicke $x_{max}$, so erstreckt sich dieser vom Außenradius R2 auf dem Radius r bis zum Punkt p1, siehe Fig. 3a. In Polarkoordinaten besitzt dieser Punkt p1 die Koordinaten p1(r = r1, $\varphi = \varphi_1 = 0$), wobei $r_1 = R_2 - x_{max}$ ist. Ferner kann diesem Punkt p1 ein magnetisches Vektorpotenzial $A(p1)$ wie folgt zugeordnet werden:

$$(\text{Gl. 5}) \qquad A(p1) = A_{max} \cdot \left(1 - \frac{R_2 - r_1}{R_2 - R_1}\right) = A_{max} \cdot \left(1 - \frac{x_{max}}{D_{max}}\right)$$

Da der Abstand zwischen Außenradius R2 und Innenradius R1 der maximalen Kerndicke $D_{max}$=R2-R1 entspricht, gibt der rationale Ausdruck $\frac{R_2 - r_1}{R_2 - R_1} = \frac{x_{max}}{D_{max}}$ das Verhältnis der Magnetdicke $x_{max}$ zur Kerndicke $D_{max}$ an. Beträgt die Magnetdicke $x_{max}$ beispielsweise 90% der Kerndicke $D_{max}$, ist das Potenzial am Punkt p1 gleich 0,1·$A_{max}$. Bei 80% der Kerndicke $D_{max}$, ist das Potenzial am Punkt p1 gleich 0,2·$A_{max}$.

Da das Potenzial A am Umfang sinusförmig schwankt, kann ein Punkt p2 auf dem Umfang gefunden werden, an dem das magnetische Vektorpotenzial identisch zu dem Vektorpotenzial am Punkt p1 ist. Dies ist in Fig. 3a bei einem Umfangswinkel $\varphi_2$ der Fall. Dieser Punkt hat die Polarkoordinaten p2(r = R2, $\varphi = \varphi_2$) und kann aus der Forderung A(p1) = A(p2) hergeleitet werden:

$$(\text{Gl. 6}) \qquad A_{max} \cdot \left(1 - \frac{x_{max}}{R_2 - R_1}\right) = A_{max} \cdot \cos(p \cdot \varphi_2)$$

$$(\text{Gl. 7}) \qquad \varphi_2 = \frac{1}{p} \cdot \arccos\left(1 - \frac{x_{max}}{R_2 - R_1}\right)$$

Im Falle einer Magnetdicke $x_{max}$ von beispielsweise 90% der Kerndicke $D_{max}$, ist der Umfangswinkel $\varphi_2$ bei einem vierpoligen Statorfeld somit $\varphi_2 = \frac{1}{2} \cdot \arccos(0,1) = 42,13°$. Folglich entspricht die Breite eines Permanentmagneten 2 einem Umfangswinkel von $2 \cdot \varphi_2 = 84,26°$, was wiederum einer Umfangslänge $U_{PM}$ von

$$U_{PM} = 2\varphi_2 \cdot \frac{2\pi R_2}{360°} = 1,47 R_2$$ entspricht. Damit ist auch der Abstand zwischen zwei benachbarten Permanentmagneten 2, d.h. die Breite Us eines Arms 5 in Umfangsrichtung festgelegt und beträgt im betrachteten Fall 5,74°. Allgemein kann die Breite Us der Arme 5 wie folgt angegeben werden:

$$(Gl.\ 8) \qquad U_s = 2 \cdot \left(\frac{360°}{2 \cdot 2p} - \varphi_2\right) \cdot \frac{2\pi R_2}{360°} = \left(\frac{1}{p} - \frac{\varphi_2}{90°}\right) \pi R_2.$$

Für den betrachteten Fall einer Magnetdicke $x_{max}$ von beispielsweise 90% der Kerndicke $D_{max}$ ist die Armbreite $U_s = 0{,}1R_2$.

Die beiden Punkte p1 und p2 können durch eine Linie verbunden werden, entlang derer alle Punkte dasselbe magnetische Vektorpotenzial haben, wie die Punkte p1 und p2. Diese Linie bildet eine Hälfte der der Magnetdicke $x_{max}$ zugeordneten Äquipotenziallinie 12a, die in Fig. 3a für eine Halbseite des betrachteten Sektorabschnitts eines Pols des Rotors 1 dick eingezeichnet ist. Eine korrespondierende zweite Hälfte der Äquipotenziallinie 12a liegt spiegelsymmetrisch auf der gegenüberliegenden Halbseite des betrachteten Sektorabschnitts und ist dort gestrichelt eingezeichnet. Diese Äquipotenziallinie 12a bildet in diesem Beispiel die Innenkontur 9 des Permanentmagneten 2, welcher in dem im Uhrzeigersinn benachbarten Sektorabschnitt des nächsten Pols zur Veranschaulichung dargestellt ist.

Aus der Forderung, dass das Potenzial **A(r)** auf der Linie 12a überall identisch ist, folgt die nachfolgende Gleichung Gl. 11, die den Verlauf der Äquipotenziallinie 12a mathematisch beschreibt:

$$(Gl.\ 9) \qquad A(p1) = A(r, \varphi)$$

$$(Gl.\ 10) \qquad A_{max} \cdot \left(1 - \frac{x_{max}}{R_2 - R_1}\right) = A_{max} \cdot \left(1 - \frac{R_2 - r}{R_2 - R_1}\right) \cdot \cos(p \cdot \varphi)$$

$$(Gl.\ 11) \qquad \varphi = \frac{1}{p} arccos\left(\frac{\left(1 - \frac{x_{max}}{R_2 - R_1}\right)}{\left(1 - \frac{R_2 - r}{R_2 - R_1}\right)}\right) = \frac{1}{p} arccos\left(\frac{\left(1 - \frac{x_{max}}{D_{max}}\right)}{\left(1 - \frac{R_2 - r}{D_{max}}\right)}\right)$$

wobei

$\varphi$ der Umfangswinkel für einen beliebigen Punkt auf der Äquipotenziallinie
r der Radius für diesen beliebigen Punkt auf der Äquipotenziallinie
p die Polpaarzahl
R2 der Außenradius des Rotors
R1 der Innenradius des Rotors
$D_{max}$ die maximale radiale Dicke des Kerns und
$x_{max}$ die maximale radiale Dicke des Permanentmagneten ist.

Wie Fig. 3a zu erkennen gibt, existiert mathematisch eine Vielzahl an Äquipotenziallinien 12, 12a, die nebeneinander verlaufen. Die für die erfindungsgemäße Innenkontur 9 verwendete Äquipotenziallinie 12a ergibt sich bei gegebenen Rotorabmessungen durch die Festlegung der Dicke $x_{max}$ der Permanentmagnete 2.

Bei der Konzeption eines neuen Elektromotors können die Rotorabmessungen grundsätzlich weitgehend frei gewählt werden. Ersetzt der erfindungsgemäße Rotor 1 jedoch einen bestehenden Rotor mit einer anderen Magnetgeometrie, so sind die Rotorabmessungen zwangsläufig durch diesen vorgegeben. Da die magnetische Flussdichte eines Permanentmagneten 2 mit seiner Dicke in Magnetisierungsrichtung zunimmt, ist es angestrebt, die maximale Dicke $x_{max}$ größtmöglich zu wählen. Dies ermöglicht eine Maximierung des Drehmoments.

Gleichwohl muss eine gewisse Mindestdicke der Schenkel 4 berücksichtigt werden, um den Kern 3 herstellen zu können, da der Kern 3 im Bereich der Schenkel 5 seine minimale radiale Dicke $D_{min} = R2 - R1 - x_{max}$ besitzt.

Ferner ist es im Falle des Ersetzens eines bestehenden Rotors nach dem Stand der Technik durch einen erfindungsgemäßen Rotor 1 von Vorteil, wenn die von diesem im Stator 14 induzierte Spannung übereinstimmt, damit im Falle einer vektoriellen Regelung des Motors diese nicht geändert werden muss. In diesem Fall kann die maximale Dicke $x_{max}$ der Permanentmagnete 2 gerade so gewählt werden, dass der Rotor 1 im Stator 14 eine identische Spannung wie der zu ersetzende Rotor induziert.

Um alle Anwendungsfälle abzudecken, ist erfindungsgemäß die maximale radiale Dicke $x_{max}$ der Permanentmagnete 2 so gewählt, dass sie zwischen 65% und 95% der maximalen radialen Dicke $D_{max}$ des Kerns 3 beträgt. Vorzugsweise beträgt sie zwischen 80% und 90%, um einen Kompromiss zwischen Magnetdicke und Kerndicke zu erreichen.

Je nach Anzahl 2p der Pole des zu realisierenden magnetischen Rotorfeldes und Verhältnis von Außenradius R2 zum Innenradius R1 erstrecken sich die Äquipotenziallinien 12 entlang eines breiteren (bei wenigen Polen) oder schmaleren (bei vielen Polen) Lochkreissegments. Des Weiteren variiert auch die Form der Äquipotenziallinien 12 in Abhängigkeit der Pole sowie der Kerndicke.

Ferner ist am Beispiel des vierpoligen Rotors in Fig. 3a festzustellen, dass sich die Äquipotenziallinien 12 mit zunehmender Nähe zum Innenradius R1 in ihrem mittleren Bereich zunehmend abflachen und sogar von einer konvexen Form radial weiter außen zu einer konkaven Form radial weiter innen übergehen, wobei diese konkave Form dadurch gekennzeichnet ist, dass der mittlere Bereich eingedrückt ist.

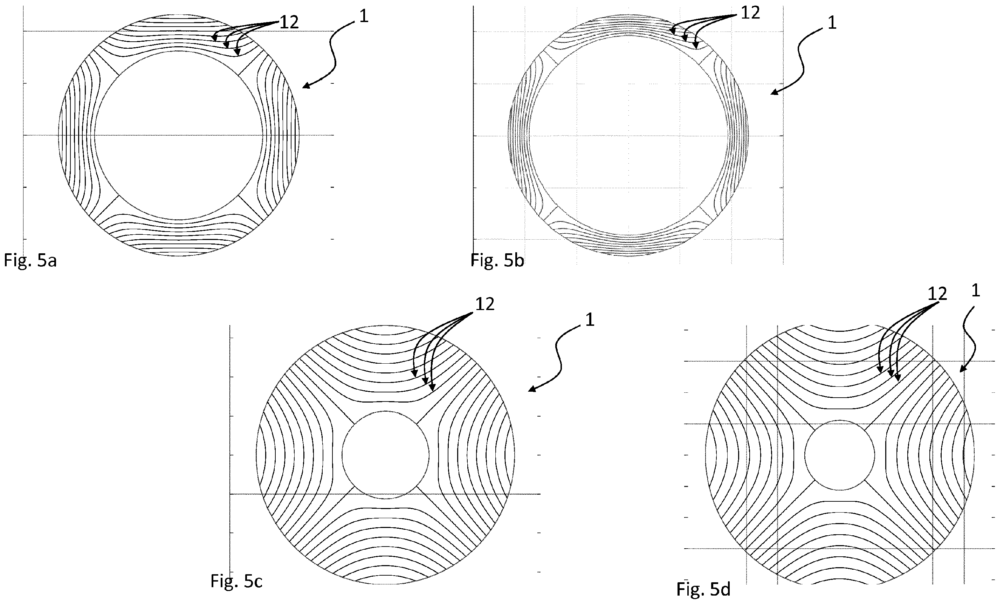

Fig. 4a bis 4d und 5a bis 5d zeigen verschiedene Rotorgestaltungen und deren Äquipotenziallinienverläufe. So zeigt Fig. 4a einen zweipoligen Rotor 1, Fig. 4b den vierpoligen Rotor gemäß Fig. 3a, Fig. 4c einen sechspoligen und Fig. 4a einen achtpoligen Rotor. Innenradius R1 und Außenradius R2 sind in den Fig. 4a-4d identisch.

Fig. 5a bis 5d zeigen am Beispiel vierpoliger Rotoren den Einfluss der Radien des Rotors auf den Äquipotenziallinienverlauf. In Fig. 5a ist der Innenradius R1 im Vergleich zu Fig. 3a, 4b verkleinert, in Fig. 5b noch weiter verkleinert. Es ist erkennbar, dass die Äquipotenziallinien 12 in der Richtung vom Außenradius R2 zum Innenradius R1 deutlich früher einen konkaven mittleren Bereich aufweisen. Sie werden durch die Vergrößerung des Innenradius R1 gestaucht. In Fig. 5c ist der Innenradius R1 im Vergleich zu Fig. 3a, 4b verkleinert, in Fig. 5d noch weiter verkleinert. Die Äquipotenziallinien 12 werden durch die Verringerung des Innenradius R1 zur Rotorachse 21 hin gedehnt. Unabhängig von der Stauchung oder Dehnung bleibt jedoch der Punkt, an dem eine jeweilige Äquipotenziallinie 12 den Umfang schneidet, gleich, so dass der Abstand Us (vgl. Fig. 3a) zwischen benachbarten Permanentmagneten 2 im Winkelmaß unabhängig vom Innen- und Außenradius R1, R2 ist, vielmehr allein von der Magnetdicke $x_{max}$ abhängt.

Fig. 6a und 6b sowie Fig. 7a und 7b zeigen jeweils den Feldlinienverlauf und die Flußdichteverteilung in Graustufen in einem dreiphasigen Elektromotor 13 mit einem Rotor 1 mit Ringmagnet 2a nach dem Stand der Technik (Fig. 6a, 7b) im Vergleich zu einem Rotor 1 mit erfindungsgemäßen Magneten 2, deren Innenkontur 9 im Wesentlichen auf einer Äquipotenziallinie 12a liegt bzw. im Wesentlichen durch eine solche beschrieben ist.

Der Elektromotor 13 ist ein mittels Frequenzumrichter angesteuerter, elektronisch kommutierter Synchronmotor und weist in herkömmlicher Weise einen Stator 14 mit sechs Spulen 15 aus Kupferdraht auf, die auf Spulenträgern 15a gewickelt sind und jeweils einen Polsteg 18 umgeben, der sich durch eine Spule 15 radial hindurch erstreckt. Radial außen sind alle Polstege 18 mit einem Rückschlussring 16 verbunden. Am radial innenliegenden Ende der Polstege 18 erweitern sich diese in Umfangsrichtung beidseitig zur Bildung jeweils eines Polschuhs 17, die dem Rotor 1 radial gegenüberliegen, wobei zwischen Rotor 1 und Polschuh 17 ein Luftspalt 20 existiert. Feldlinien 19 veranschaulichen den Verlauf des magnetischen Feldes für einen beispielhaften Moment der Statorbestromung.

Fig. 6a zeigt ein Ausführungsbeispiel mit einem vergleichsweise dünnen Ringmagneten 2a ohne Eisenkern, der durch den in Fig. 6b dargestellten Rotor 1 mit erfindungsgemäßer Magnetgeometrie ersetzt werden kann. Fig. 7a zeigt ein Ausführungsbeispiel mit einem vergleichsweise dicken Ringmagneten 2a ohne Eisenkern, der durch den in Fig. 7b dargestellten Rotor 1 mit erfindungsgemäßer Magnetgeometrie ersetzt werden kann. Wie ein Vergleich von Fig. 6a mit Fig. 6b sowie von Fig. 7a mit Fig. 7b jeweils zeigt, sind die Verläufe der Feldlinien 19 im Rotor 1 mit erfindungsgemäßen Magneten 2 im Wesentlichen identisch zum Feldlinienverlauf bei einem Rotor mit einem Ringmagneten 2a. Dies wird gerade durch die besondere Innenkontur 9 der Permanentmagnete 2 erreicht, weil sie so gewählt ist, dass sie senkrecht zu den Feldlinien des magnetischen Flusses liegt. Gleichzeitig werden aber zwischen 29% (im Falle des dünnen Ringmagneten 2a) und 50% (im Falle des dicken Ringmagneten) weniger Magnetmaterial für den Rotor 1 benötigt. Dies ist dadurch bedingt, dass flussleitende Bereiche im Inneren des Kerns 3 Magnetmaterial des Ringmagneten 2a in Bereichen ersetzen, die nur dem magnetischen Rückschluss im Rotor 1 dienen. Die Erfindung ermöglicht somit den Einsatz einer minimalen Menge an Magnetmaterial bei identischen oder sogar besseren magnetischen Eigenschaften, insbesondere bei gleichem oder sogar erhöhten Drehmoment.

Als Beispiele für eine konkrete Dimensionierung eines erfindungsgemäßen Rotors 1 kann gemäß einer ersten Ausführungsvariante beispielsweise ein Innenradius R1 von 5,615 mm und ein Außenradius R2 von 11,615mm verwendet werden, so dass eine Kerndicke Dmax von 6mm gegeben ist. Gemäß einer zweiten Ausführungsvariante kann der Rotor 1 mit einem Innenradius R1 von 6,5mm und einem Außenradius R2 von 12,4mm hergestellt werden, so dass eine Kerndicke Dmax von 5,9mm vorliegt. Gemäß einer dritten Ausführungsvariante kann der Rotor 1 mit einem Innenradius R1 von ca. 10mm und einem Außenradius R2 von ca. 19,5mm hergestellt werden, so dass eine Kerndicke Dmax von mm 9,5mm vorliegt.

Fig. 8a-8d und 9a-9e zeigen jeweils ein Ausführungsbeispiel eines erfindungsgemäßen Rotors 1 gemäß der ersten Ausführungsvariante, wobei Fig. 8a, 9a den Kern 3 im Querschnitt, Fig. 8b, 9b den Kern 3 in perspektivischer Ansicht, Fig. 8c, 9c einen Permanentmagneten 2 und Fig. 8d, 9d den gesamten Rotor 1 im Querschnitt zeigen. Fig. 9a' zeigt das in Fig. 9a umkreiste Detail B in vergrößerter Ansicht.

Wie anhand der Figuren 8d und 9d zu erkennen ist, weist der Rotor 1 vier Permanentmagnete 2 auf, die in Oberflächenausnehmungen 7 des im Querschnitt kreuz- oder sternförmigen Kerns 3 formschlüssig angeordnet sind, so dass die Außenkontur 8 der Magnete 2 mit dem äußeren Umfangsabschnitt der Arme 5 des Kerns 3 fluchten. Hierzu weisen die Magnete 2 eine Außenkontur 8 auf, die einem Bogenabschnitt mit dem Außenradius R2 des Kerns 2 entspricht. Eine Hülse 10 kapselt die Magnete 2 und den Kern 3 dicht ein. Eine Welle 11 erstreckt sich durch eine zentrale Ausnehmung 6 mit dem Innenradius R1 des Kerns 3, wobei zwischen Welle 11 und Kern 3 ein Ringspalt 20 besteht. Nicht dargestellte Endkappen verbinden den Rotor 1 drehfest mit der Welle 11. Ein solcher Rotor 1 ist speziell für den Nasslauf vorgesehen, insbesondere in einem Kreiselpumpenaggregat wie beispielsweise einer Umwälzpumpe für Heizungs- oder Kühlanlagen.

Bei dem ersten Ausführungsbeispiel besitzen die Permanentmagnete 2 eine maximale axiale Dicke $x_{max}$, die 2/3 bzw. ca. 66% der maximalen radialen Kerndicke $D_{max} = R2-R1$ entspricht. Die Innenkontur 9 der Permanentmagnete 2 verläuft im Wesentlichen entlang einer Äquipotenziallinie 12 des magnetischen Feldes im Kern 3, die den geometrischen Ort aller Punkte desselben magnetischen Vektorpotenzials miteinander verbindet, den der Punkt p1 bei 1/3 der Kerndicke in Polmitte, d.h. entlang der Mittelachse 26 der Magnete 1 aufweist. Mit anderen Worten verbindet die Äquipotenziallinie 12 alle Punkte mit einem Potenzial $A(r)$ von $1/3 \cdot A_{max}$.

Bei dem zweiten Ausführungsbeispiel besitzen die Permanentmagnete 2 eine maximale axiale Dicke $x_{max}$ von ca. 85,25 % der maximalen radialen Kerndicke $D_{max}$. Die Innenkontur 9 der Permanentmagnete 2 verläuft somit im Wesentlichen entlang einer Äquipotenziallinie 12 des magnetischen Feldes im Kern 3, die den geometrischen Ort aller Punkte miteinander verbindet, die das magnetische Vektorpotenzial $A(r)$ von $0,1475 \cdot A_{max}$ aufweisen.

In der Praxis ist eine mathematisch exakte Geometrie der Äquipotenziallinie 12 nicht einfach herzustellen. Zur Erzeugung der Innenkontur 9 wird deshalb eine Approximation der Äquipotenziallinie 12 durch Abschnitte aus Geraden bestimmter Länge und Bögen bestimmter Radien und Winkel verwendet, die versatz- und knickfrei ineinander übergehen.

Wie Fig. 8c zeigt, ist im Falle des ersten Ausführungsbeispiels die Innenkontur 9 bezogen auf eine Halbseite des Permanentmagneten 2 durch zwei Abschnitte 23b, 24b gebildet, wobei ein erster, seitlich außen liegender Abschnitt 23b durch einen Kreisbogen mit einem Radius R3 und einem Mittelpunkt jenseits der Außenkontur des Magneten 2 gebildet ist. Der Radius R3 beträgt beispielhaft 8,3mm. Daran schließt sich versatz- und knickfrei ein zweiter Abschnitt 24b in Gestalt einer Geraden mit einer Länge L1 an. Die Länge L1 beträgt 1,5mm. Dieser zweite Abschnitt 24b ist Teil des mittleren Bereichs des Permanentmagneten 2. Da der Magnet 2 siegelsymmetrisch zu seiner Mittelachse 26 ist, weist auch die andere Halbseite des Magneten 2 einen korrespondierenden ersten und zweiten Abschnitt 23b, 24b auf, wobei der zweite, gerade Abschnitt 24b der einen Halbseite in den zweiten, geraden Abschnitt der anderen Halbseite versatzfrei und knickfrei übergeht, so dass die Innenkontur 9 insgesamt als durch drei Abschnitte beschrieben, betrachtet werden kann, die die entsprechende Äquipotenziallinie 12a approximieren.

Aus Fig. 8a wird ersichtlich, dass die Oberflächenausnehmungen 7 im Kern 3 eine zur Innenkontur 9 der Magnete 2 gemäß Fig. 8c korrespondierende Form aufweisen, die pro Halbseite aus zwei Abschnitten 23a, 24a gebildet ist, welche gut in Fig. 8b zu erkennen sind. Hierzu besitzt der Kern 3 im Bereich der Oberflächenausnehmungen 7 eine Außenkontur mit einem ersten, seitlich außenliegenden Abschnitt 23a in Gestalt eines Kreisbogens mit dem Radius R3 und einem Mittelpunkt jenseits des Kerns 3, und mit einem zweiten Abschnitt 24a in Gestalt einer Geraden mit einer Länge L1, die sich versatz- und knickfrei an den ersten Abschnitt 23a anschließt. Auch hier gehen die beiden geraden Abschnitte 24a der Halbseiten der Oberflächenausnehmungen 7 ineinander versatzfrei und knickfrei über, so dass eine stetige Kontur vorliegt.

Wie Fig. 9c zeigt, ist im Falle des zweiten Ausführungsbeispiels die Innenkontur 9 bezogen auf eine Halbseite des Permanentmagneten 2 durch drei Abschnitte 23b, 24b, 25b gebildet. Dabei ist ein erster, seitlich außen liegender Abschnitt 23b durch einen Kreisbogen mit einem Radius R5 und einem Mittelpunkt jenseits der Außenkontur des Magneten 2 gebildet. Der Radius R5 beträgt beispielhaft 17,5mm. Ferner ist auch hier ein zweiter Abschnitt 24b in Gestalt einer Geraden mit einer Länge L2 vorhanden, der den mittleren Bereich der Innenkontur 9 des Permanentmagneten 2 definiert. Die Länge L2 beträgt 2,85 mm. Zwischen dem ersten und zweiten Abschnitt 23b, 24b befindet sich ein dritter Abschnitt 25b, welcher ebenfalls durch einen Kreisbogen gebildet ist, allerdings mit einem kleineren Radius R4, als ihn der erste Abschnitt 23b aufweist, und mit einem bestimmten Winkel $\alpha$. Der Radius R4 beträgt beispielhaft 4,45mm. Der Winkel $\alpha$ beträgt 32°. Der Kreisbogen des dritten Abschnitts 25b hat ebenfalls einen Mittelpunkt jenseits der Außenkontur des Magneten 2. Alle drei Abschnitte 23b, 24b 25b gehen versatz- und knickfrei ineinander über. Da der Magnet 2 auch hier siegelsymmetrisch zu seiner Mittelachse 26 ist, weist auch die andere Halbseite des Magneten einen korrespondierenden ersten, zweiten und dritten Abschnitt 23b, 24b, 25b auf, wobei der zweite, gerade Abschnitt 24b der einen Halbseite in den zweiten, geraden Abschnitt der anderen Halbseite versatzfrei und knickfrei übergeht, so dass die Innenkontur 9 insgesamt als durch fünf Abschnitte beschrieben, betrachtet werden kann, die die entsprechende Äquipotenziallinie 12a approximieren.

Aus Fig. 9a wird ersichtlich, dass die Oberflächenausnehmungen 7 im Kern 3 eine zur Innenkontur 9 der Magnete 2 gemäß Fig. 9c korrespondierende Form aufweisen, die pro Halbseite aus drei Abschnitten 23a, 24a, 25a gebildet ist, welche gut in Fig. 9b zu erkennen sind. Fig. 9a' zeigt diese Abschnitte 23a, 24a, 25a im Querschnitt, indem sie das Detail B in Fig. 9a vergrößert zeigt. Der Kern 3 besitzt im Bereich der Oberflächenausnehmungen 7 eine Außenkontur mit einem ersten, seitlich außen liegenden Abschnitt 23a in Gestalt eines Kreisbogens mit dem Radius R5 und einem Mittelpunkt jenseits des Kerns 3, mit einem innenliegenden zweiten Abschnitt 24a in Gestalt einer Geraden der Länge L2 und mit einem zwischen diesen Abschnitten 23a, 24a liegenden dritten Abschnitt 25a in Gestalt eines Kreisbogens mit dem Radius R4, dem Winkel $\alpha$ und einem Mittelpunkt jenseits des Kerns 3. Der erste Abschnitt 23a geht versatz- und knickfrei in den dritten Abschnitt 25a und dieser versatz- und knickfrei in den zweiten Abschnitt 24a über. Ferner gehen auch hier die beiden geraden Abschnitte 24a der beiden Halbseiten der Oberflächenausnehmungen 7 ineinander versatzfrei und knickfrei über, so dass eine stetige Kontur vorliegt.

Die Permanentmagnete 2 können aufgrund ihrer Geometrie sowohl isotrop als auch anisotrop sein. Als Magnetmaterial kann für die Permanentmagnete 2 ein bekanntes Material verwendet werden, beispielsweise Ferrit oder eine Metalllegierung, die seltene Erden aufweist, beispielsweise eine Legierung aus Neodym-Eisen-Bor (NdFeB).

Die Herstellung der Permanentmagnete kann nach einem dem Fachmann bekannten Verfahren erfolgen. Beispielsweise können die Magnete durch Sintern oder Umformen (Warmfließpressen) heißgepresster Magnete in die erfindungsgemäße Form erfolgen, was leicht möglich ist. Alternativ können kunststoffgebundene Magnete verwendet werden, die entweder ebenfalls in die erfindungsgemäße Form mechanisch umgeformt werden, oder extrudiert oder im Spritzguss direkt in dieser erfindungsgemäßen Form hergestellt werden.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale entsprechen dem Umfang der beigefügten Ansprüche.

**Bezugszeichenliste**

1 Rotor
2 Permanentmagnete
2a Ringmagnet
2b Blockmagnet
3 Kern
4 Schenkel
5 Arm
6 Ausnehmung
7 Oberflächenausnehmung
8 Außenkontur
9 Innenkontur
10 Hülse
11 Welle
12 Äquipotenziallinie
12a gewählte Äquipotenziallinie
13 Elektromotor
14 Stator
15 Spulen
15a Spulenträger
16 Rückschlussring
17 Polschuh
18 Polsteg
19 Feldlinien
20 Luftspalt

21 Rotorachse
22 Hohler Ringraum
23a erster Abschnitt der Innenkontur der Oberflächenausnehmung
23b erster Abschnitt der Innenkontur des Permanentmagneten
24a zweiter Abschnitt der Innenkontur der Oberflächenausnehmung
24b zweiter Abschnitt der Innenkontur des Permanentmagneten
25a dritter Abschnitt der Innenkontur der Oberflächenausnehmung
25b dritter Abschnitt der Innenkontur des Permanentmagneten
26 Mittelachse der Magnete

## Patentansprüche

1.  Rotor (1) für eine rotierende elektrische Maschine, insbesondere für einen Elektromotor (13), umfassend eine Anzahl (2p) von radial magnetisierten Permanentmagneten (2), die entlang des Außenumfangs des Rotors (1) in Oberflächenausnehmungen (7) eines flussleitenden Kerns (3) angeordnet sind, der drehfest mit einer Rotorwelle (11) verbunden ist oder durch einen Teil einer Rotorwelle gebildet ist, wobei die Permanentmagnete (2) im Querschnitt betrachtet durch eine kreisbogenförmigen Außenkontur (8) mit einem Radius, der dem Außenradius (R2) des Rotors (1) entspricht, und eine Innenkontur (9) derart definiert sind, dass die radiale Dicke ($x_{max}$) der Permanentmagnete (2) in ihrer Mitte maximal ist und in Umfangsrichtung zu den Seiten hin abnimmt, wobei die maximale radiale Dicke ($x_{max}$) der Permanentmagnete 65-95% der maximalen radialen Dicke ($D_{max}$) des Kerns (3) beträgt, **dadurch gekennzeichnet, dass** die Innenkontur (9) im Wesentlichen durch eine magnetische Äquipotenziallinie (12) beschrieben ist und der Außenradius des Kerns (3) dem Außenradius (R2) des Rotors (1) entspricht.

2.  Rotor (1) nach Anspruch 1, **dadurch gekennzeichnet, dass** die maximale radiale Dicke ($x_{max}$) der Permanentmagnete (2) 65-70% oder 85-90% der maximalen radialen Dicke ($D_{max}$) des Kerns (3) beträgt.

3.  Rotor (1) nach Anspruch 1 oder 2, **dadurch gekennzeichnet, dass** die Magnetisierung benachbarter Permanentmagnete (2) entgegengesetzt ist.

4.  Rotor (1) nach einem der vorherigen Ansprüche, **dadurch gekennzeichnet, dass** sein Außenradius (R2) kleiner oder gleich 22,5mm, bevorzugt zwischen 10mm und 15mm, insbesondere etwa 12mm beträgt.

5.  Rotor (1) nach einem der vorherigen Ansprüche, **dadurch gekennzeichnet, dass** die maximale radiale Dicke ($D_{max}$) des Kerns (3) zwischen 4mm und 10mm, bevorzugt zwischen 5mm und 7mm, insbesondere etwa 6mm beträgt.

6.  Rotor (1) nach einem der vorherigen Ansprüche, **dadurch gekennzeichnet, dass** die Äquipotenziallinie (12) durch Abschnitte aus Geraden und/ oder Kreisbögen approximiert ist.

7.  Rotor (1) nach einem der vorherigen Ansprüche, **dadurch gekennzeichnet, dass** die Äquipotenziallinie (12) durch drei oder mehr Abschnitte aus Geraden und/ oder Kreisbögen approximiert ist, die knick- und versatzfrei ineinander übergehen.

8.  Rotor (1) nach einem der vorherigen Ansprüche, **dadurch gekennzeichnet, dass** die Äquipotenziallinie (12) durch die folgende Gleichung beschrieben ist,

$$\varphi = \frac{1}{p} arccos\left(\frac{\left(1 - \frac{x_{max}}{D_{max}}\right)}{\left(1 - \frac{R_2 - r}{D_{max}}\right)}\right)$$

wobei

φ der Winkel eines Punktes in Polarkoordinaten
r der Radius des Punktes in Polarkoordinaten
p die Polpaarzahl des Rotors

$x_{max}$ die maximale radiale Dicke der Permanentmagnete
$D_{max}$ die maximale radiale Dicke des Kerns und
R2 der Außenradius des Rotors ist.

9. Rotor (1) nach einem der vorherigen Ansprüche, **dadurch gekennzeichnet, dass** die Permanentmagnete (2) an ihren Umfangsenden Abflachungen aufweisen.

10. Rotor (1) nach einem der vorherigen Ansprüche, **dadurch gekennzeichnet, dass** eine zylindrische Hülse (10) den Kern (3) und die Permanentmagnete (2) außen insbesondere abgedichtet einkapselt.

11. Rotor (1) nach einem der vorherigen Ansprüche, **dadurch gekennzeichnet, dass** er ein Nassläufer ist.

12. Rotor (1) nach einem der vorherigen Ansprüche, **dadurch gekennzeichnet, dass** zwischen dem Kern (3) und der Rotorwelle (6) ein insbesondere abgedichteter ringförmiger Hohlraum (20) besteht und der Kern (3) nur über beidseitig der axialen Enden des Kerns (3) angeordnete Endkappen drehfest mit der Rotorwelle (11) verbunden ist.

13. Rotor (1) nach einem der vorherigen Ansprüche, **dadurch gekennzeichnet, dass** er vier- oder sechspolig ist.

14. Kreiselpumpe, insbesondere für eine Heizungs-, Kühl oder Trinkwasseranlage, mit einem sie antreibenden Elektromotor (13), **dadurch gekennzeichnet, dass** der Elektromotor (13) einen Rotor (1) nach einem der vorherigen Ansprüche aufweist.

**Claims**

1. Rotor (1) for a rotating electric machine, in particular for an electric motor (13), comprising a number (2p) of radially magnetized permanent magnets (2), which are arranged along the outer circumference of the rotor (1) in surface recesses (7) of a flux-conducting core (3), which is non-rotatably connected to a rotor shaft (11) or is formed by a part of a rotor shaft, wherein the permanent magnets (2), viewed in cross-section, are defined by a circular arc-shaped outer contour (8) with a radius corresponding to the outer radius (R2) of the rotor (1), and an inner contour (9) such that the radial thickness ($x_{max}$) of the permanent magnets (2) is maximal in their centre and decreases in circumferential direction towards the sides, wherein the maximum radial thickness ($x_{max}$) of the permanent magnets amounts to 65-95% of the maximum radial thickness ($D_{max}$) of the core (3), **characterized in that** the inner contour (9) is essentially described by a magnetic equipotential line (12) and the outer radius of the core (3) corresponds to the outer radius (R2) of the rotor (1).

2. Rotor (1) according to claim 1, **characterized in that** the maximum radial thickness ($x_{max}$) of the permanent magnets (2) amounts to 65-70% or 85-90% of the maximum radial thickness ($D_{max}$) of the core (3).

3. Rotor (1) according to claim 1 or 2, **characterized in that** the magnetization of adjacent permanent magnets (2) is opposite.

4. Rotor (1) according to one of the preceding claims, **characterized in that** its outer radius (R2) is less than or equal to 22.5mm, preferably between 10mm and 15mm, in particular approximately 12mm.

5. Rotor (1) according to one of the preceding claims, **characterized in that** the maximum radial thickness ($D_{max}$) of the core (3) is between 4mm and 10mm, preferably between 5mm and 7mm, in particular approximately 6mm.

6. Rotor (1) according to one of the preceding claims, **characterized in that** the equipotential line (12) is approximated by sections of straight lines and/or circular arcs.

7. Rotor (1) according to one of the preceding claims, **characterized in that** the equipotential line (12) is approximated by three or more sections of straight lines and/or circular arcs, which transition into each other without a kink or offset.

8. Rotor (1) according to one of the preceding claims, **characterized in that** the equipotential line (12) is described by the following equation,

$$\varphi = \frac{1}{p} arccos\left(\frac{\left(1 - \frac{x_{max}}{D_{max}}\right)}{\left(1 - \frac{R_2 - r}{D_{max}}\right)}\right)$$

where

$\varphi$ is the angle of a point in polar coordinates
r is the radius of a point in polar coordinates
p is the pole pair number of the rotor
$x_{max}$ is the maximum radial thickness of the permanent magnets
$D_{max}$ is the maximum radial thickness of the core, and
R2 is the outer radius of the rotor.

**9.** Rotor (1) according to one of the preceding claims, **characterized in that** the permanent magnets (2) have flattenings at their circumferential ends.

**10.** Rotor (1) according to one of the preceding claims, **characterized in that** a cylindrical sleeve (10) encapsulates the core (3) and the permanent magnets (2) externally, in particular in a sealed manner.

**11.** Rotor (1) according to one of the preceding claims, **characterized in that** it is a wet runner.

**12.** Rotor (1) according to one of the preceding claims, **characterized in that** there is an annular, in particular sealed, cavity (20) between the core (3) and the rotor shaft (6), and the core (3) is fixed in rotation to the rotor shaft (11) only via end caps arranged on both sides of the axial ends of the core (3).

**13.** Rotor (1) according to one of the preceding claims, **characterized in that** it has four-poles or six-poles.

**14.** Centrifugal pump, in particular for a heating, cooling or drinking water installation, with an electric motor (13) driving it, **characterized in that** the electric motor (13) comprises a rotor (1) according to one of the preceding claims.

**Revendications**

**1.** Rotor (1) pour une machine électrique tournante, en particulier pour un moteur électrique (13), comprenant un nombre (2p) d'aimants permanents (2) magnétisés radialement, qui sont disposés le long de la circonférence extérieure du rotor (1) dans des évidements de surface (7) d'un noyau (3) conducteur de flux, lequel est relié en rotation avec un arbre de rotor (11) ou est formé par une partie d'un arbre de rotor, les aimants permanents (2), considérés en coupe transversale, étant définis par un contour extérieur (8) en arc de cercle avec un rayon correspondant au rayon extérieur (R2) du rotor (1), et un contour intérieur (9) de sorte que l'épaisseur radiale ($x_{max}$) des aimants permanents (2) est maximale en leur centre et diminue, dans la direction circonférentielle, vers les côtés, l'épaisseur radiale maximale ($x_{max}$) des aimants permanents représentant 65 à 95% de l'épaisseur radiale maximale ($D_{max}$) du noyau (3), **caractérisé en ce que** le contour intérieur (9) est essentiellement décrit par une ligne équipotentielle magnétique (12) et que le rayon extérieur du noyau (3) correspond au rayon extérieur (R2) du rotor (1).

**2.** Rotor (1) selon la revendication 1, **caractérisé en ce que** l'épaisseur radiale maximale ($x_{max}$) des aimants permanents (2) représente 65 à 70% ou 85 à 90% de l'épaisseur radiale maximale ($D_{max}$) du noyau (3).

**3.** Rotor (1) selon la revendication 1 ou 2, **caractérisé en ce que** la magnétisation d'aimants permanents (2) adjacents est opposée.

**4.** Rotor (1) selon l'une des revendications précédentes, **caractérisé en ce que** son rayon extérieur (R2) est inférieur ou égal à 22,5 mm, de préférence entre 10 mm et 15 mm, notamment environ 12 mm.

**5.** Rotor (1) selon l'une des revendications précédentes, **caractérisé en ce que** l'épaisseur radiale maximale ($D_{max}$) du noyau (3) est comprise entre 4 mm et 10 mm, de préférence entre 5 mm et 7 mm, notamment environ 6 mm.

**6.** Rotor (1) selon l'une des revendications précédentes, **caractérisé en ce que** la ligne équipotentielle (12) est approchée par des sections de lignes droites et/ou d'arcs de cercle.

**7.** Rotor (1) selon l'une des revendications précédentes, **caractérisé en ce que** la ligne équipotentielle (12) est approchée par trois ou plusieurs sections de lignes droites et/ou d'arcs de cercle, qui se raccordent sans cassure ni décalage.

**8.** Rotor (1) selon l'une des revendications précédentes, **caractérisé en ce que** la ligne équipotentielle (12) est décrite par l'équation suivante,

$$\varphi = \frac{1}{p} arccos\left(\frac{\left(1 - \frac{x_{max}}{D_{max}}\right)}{\left(1 - \frac{R_2 - r}{D_{max}}\right)}\right)$$

où

$\varphi$ est l'angle d'un point en coordonnées polaires
$r$ est le rayon du point en coordonnées polaires
$p$ est le nombre de paires de pôles du rotor
$x_{max}$ est l'épaisseur radiale maximale des aimants permanents
$D_{max}$ est l'épaisseur radiale maximale du noyau, et
$R2$ est le rayon extérieur du rotor.

**9.** Rotor (1) selon l'une des revendications précédentes, **caractérisé en ce que** les aimants permanents (2) présentent des aplatissements à leurs extrémités circonférentielles.

**10.** Rotor (1) selon l'une des revendications précédentes, **caractérisé en ce qu'une** douille cylindrique (10) encapsule extérieurement le noyau (3) et les aimants permanents (2), en particulier de façon étanche.

**11.** Rotor (1) selon l'une des revendications précédentes, **caractérisé en ce qu'**il s'agit d'un rotor noyé.

**12.** Rotor (1) selon l'une des revendications précédentes, **caractérisé en ce qu'**il existe une cavité (20) annulaire, en particulier étanche, entre le noyau (3) et l'arbre du rotor (6), et **en ce que** le noyau (3) est fixé en rotation à l'arbre du rotor (11) uniquement par des capuchons d'extrémité disposés de part et d'autre des extrémités axiales du noyau (3).

**13.** Rotor (1) selon l'une des revendications précédentes, **caractérisé en ce qu'**il est à quatre ou six pôles.

**14.** Pompe centrifuge, en particulier pour une installation de chauffage, de refroidissement ou d'eau potable, équipée d'un moteur électrique (13) la mettant en mouvement, **caractérisée en ce que** le moteur électrique (13) comprend un rotor (1) selon l'une des revendications précédentes.

Fig. 1b

Fig. 1d

Fig. 1c

Fig. 1a   (Stand der Technik)

Fig. 2b

Fig. 2a

Fig. 3a

Fig. 3b

Fig. 3c

EP 4 038 722 B1

Fig. 4a

Fig. 4b

Fig. 4c

Fig. 4d

Fig. 5a

Fig. 5b

Fig. 5c

Fig. 5d

Fig. 6a

(Stand der Technik)

Fig. 6b

EP 4 038 722 B1

Fig. 7a

(Stand der Technik)

Fig. 7b

Fig. 8b

Fig. 8d

Fig. 8a

Fig. 8c

Fig. 9a

Fig. 9a'

Detail B

Fig. 9b

Fig. 9c

Fig. 9d

EP 4 038 722 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3451500 A1